(19) Europäisches Patentamt / European Patent Office / Office européen des brevets

(11) **EP 4 462 701 A1**

(12) **EUROPEAN PATENT APPLICATION**
published in accordance with Art. 153(4) EPC

(43) Date of publication:
**13.11.2024 Bulletin 2024/46**

(21) Application number: **22925741.5**

(22) Date of filing: **19.12.2022**

(51) International Patent Classification (IPC):
***H04J 11/00*** (2006.01)

(52) Cooperative Patent Classification (CPC):
**H04J 11/00**

(86) International application number:
**PCT/CN2022/140125**

(87) International publication number:
**WO 2023/151391 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.02.2022 CN 202210122311
25.03.2022 CN 202210303346**

(71) Applicant: **Huawei Technologies Co., Ltd.
Shenzhen, Guangdong 518129 (CN)**

(72) Inventors:
• **WANG, Bichai
  Shenzhen, Guangdong 518129 (CN)**
• **LI, Xueru
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **BEAM TRAINING METHOD AND COMMUNICATION APPARATUS**

(57) This application relates to the field of wireless communication technologies, and provides a beam training method and a communication apparatus, to reduce interference caused by training beams in different directions to an information receiving and sending process of another user equipment UE, and help improve information transmission reliability. The method includes: A first UE sends first control information by using a first transmission beam, where the first control information includes resource location information of a first resource. Then, the first UE sends a first reference signal on the first resource by using M transmission beams, where M is a positive integer, the first transmission beam is different from each of the M transmission beams, and the first transmission beam covers each of the M transmission beams.

FIG. 7

## Description

This application claims priorities to Chinese Patent Application No. 202210122311.X, filed with the China National Intellectual Property Administration on February 9, 2022 and entitled "SIDELINK POWER CONTROL METHOD", and to Chinese Patent Application No. 202210303346.3, filed with the China National Intellectual Property Administration on March 25, 2022, and entitled "BEAM TRAINING METHOD AND COMMUNICATION APPARATUS", both of which are incorporated herein by reference in their entireties.

## TECHNICAL FIELD

Embodiments of this application relate to the wireless communication field, and in particular, to a beam training method and a communication apparatus.

## BACKGROUND

Beam training is a process in which different transmission beams or reception beams are switched between a transmitting user equipment (transmitting UE, TxUE) and a receiving user equipment (receiving UE, RxUE) to perform channel measurement, so as to determine a reception and transmission beam pair with good quality. After the beam training, the TxUE and the RxUE communicate with each other by using the reception and transmission beam pair with good quality. For a TxUE 1 on a first communication link, the TxUE 1 sends resource reservation indication information by using a transmission beam, to indicate a communication resource used by the TxUE 1 for beam training, so that a UE on another communication link does not select the same communication resource.

However, if the transmission beam that carries the resource reservation indication information is not aligned with a user equipment (user equipment, UE) on a second communication link, the UE on the second communication link cannot receive the resource reservation indication information. Consequently, the communication resource used by the TxUE 1 to perform beam training cannot be excluded. When the UE on the second communication link is within a coverage area of some training beams of the TxUE 1, the training beams may cause large interference to the UE on the second communication link. As a result, the UE on the second communication link cannot correctly receive information.

## SUMMARY

This application provides a beam training method and a communication apparatus, to reduce interference caused by training beams in different directions to an information receiving and sending process of another UE, and help improve information transmission reliability.

To achieve the foregoing objective, this application uses the following technical solutions.

According to a first aspect, a beam training method is provided. The method may be performed by first UE, or may be performed by a chip used in the first UE. The following uses an example in which the method is performed by the first UE for description. The method includes: The first UE sends first control information by using a first transmission beam, where the first control information includes resource location information of a first resource. The first UE sends a first reference signal on the first resource by using M transmission beams, where M is a positive integer, the first transmission beam is different from each of the M transmission beams, and the first transmission beam covers each of the M transmission beams.

Therefore, for a UE that receives the first control information, the UE determines, based on a beam direction of the first transmission beam, whether the UE is within a coverage area of at least one of the M transmission beams. If the UE is within the coverage area of the at least one of the M transmission beams, the UE that receives the first control information excludes the first resource as much as possible when reserving a resource, to reduce interference caused by a training beam to the UE, and improve information transmission reliability.

In a possible design, the first control information further includes beam gain information, and the beam gain information is determined based on a beam gain of the first transmission beam and a beam gain of at least one of the M transmission beams.

Therefore, for the UE that receives the first control information, the UE determines, based on the beam gain information, whether the M transmission beams cause interference to information receiving and sending of the UE.

In a possible design, the beam gain information includes at least one of the following:

a largest value of differences between the beam gain of the first transmission beam and beam gains of the M transmission beams;
a smallest value of the differences between the beam gain of the first transmission beam and the beam gains of the M transmission beams;

an average value of all the differences between the beam gain of the first transmission beam and the beam gains of the M transmission beams;

a difference between the beam gain of the first transmission beam and a beam gain of one of the M transmission beams;

a largest value of ratios of the beam gain of the first transmission beam to the beam gains of the M transmission beams;

a smallest value of the ratios of the beam gain of the first transmission beam to the beam gains of the M transmission beams;

an average value of all the ratios of the beam gain of the first transmission beam to the beam gains of the M transmission beams; and

a ratio of the beam gain of the first transmission beam to a beam gain of one of the M transmission beams.

In a possible design, the first control information further includes period duration and/or a period repetition quantity of the first resource.

In a possible design, the first control information further includes first indication information, the first indication information indicates that the M transmission beams in a second period are the same as a beam set in a first period, and the second period is later than the first period.

Therefore, the UE that receives the first control information may determine, with reference to a degree of interference caused by the beam set in the first period to an information receiving and sending process of the UE, a degree of interference caused by the M transmission beams in the second period to the information receiving and sending process of the UE.

In a possible design, that the first transmission beam covers each of the M transmission beams includes:

a $Y_2$ dB beamwidth of a second transmission beam is included in a $Y_1$ dB beamwidth of the first transmission beam; or

a fifth difference is less than a first threshold, where the fifth difference is an absolute value of a difference between a beam gain of the first transmission beam and a beam gain of a second transmission beam in a beam peak direction of the second transmission beam; or

a sixth difference is less than a second threshold, where the sixth difference is an absolute value of a difference between a beam gain of the first transmission beam and a beam gain of a second transmission beam in a direction within a first range, and the first range is a $Y_3$ dB range of a peak equivalent isotropic radiated power EIRP of the second transmission beam; or

a seventh difference is less than a third threshold, where the seventh difference is an absolute value of a difference between a beam gain of the first transmission beam in a direction within a second range and a beam gain of the first transmission beam in a beam peak direction of the first transmission beam, and the second range is a $Y_4$ dB range of a peak equivalent isotropic radiated power EIRP of a second transmission beam; or

an absolute value of a difference between a first angle and a second angle is less than a fourth threshold, and an absolute value of a difference between a third angle and a fourth angle is less than a fifth threshold. The first angle is an angle in a first direction corresponding to a precoding codeword of the first transmission beam, the second angle is an angle in a first direction corresponding to a precoding codeword of the second transmission beam, the third angle is an angle in a second direction corresponding to the precoding codeword of the first transmission beam, and the fourth angle is an angle in a second direction corresponding to the precoding codeword of the second transmission beam.

The second transmission beam is each of the M transmission beams.

In a possible design, the method further includes: The first UE determines the first transmission beam based on the M transmission beams. Therefore, the M transmission beams are transmission beams for beam training, and the first UE can learn a related parameter of each of the M transmission beams, and determine the first transmission beam with reference to the M transmission beams, so that the first transmission beam can cover each of the M transmission beams.

In a possible design, the first transmission beam is a beam with a smallest $Y_5$ dB beamwidth in a third transmission beam, the third transmission beam meets a first condition, and the first condition includes that a $Y_5$ dB beamwidth of the third transmission beam includes a beam peak direction of each of the M transmission beams.

In a possible design, the resource location information includes at least one of the following: a frame index, a slot index, a symbol index, a quantity of symbols, a sub channel index, a physical resource block PRB index, a resource element RE index, a symbol offset, or a slot offset. The quantity of symbols is a quantity of symbols for sending the first reference signal in a slot, the slot offset is a quantity of offset slots between a slot in which the first reference signal is sent and a slot in which the first control information is sent, and the symbol offset is a quantity of offset symbols between a symbol for sending the first reference signal and a symbol for sending the first control information.

In a possible design, the method further includes: The first UE sends a second reference signal on a second resource of a first time unit by using N transmission beams, where N is a positive integer. The first UE sends a third signal on a third resource of the first time unit by using a fourth transmission beam, where the third signal is used by a UE that receives the second reference signal to perform automatic gain control AGC, and the fourth transmission beam covers each of the N transmission beams.

Therefore, in a beam direction of the fourth transmission beam, a receive power range of the fourth transmission beam is close to a receive power range of each of the N transmission beams. Therefore, for a UE that receives the third signal, after performing AGC based on the third signal, the UE receives each of the N transmission beams based on an AGC result, to improve a possibility of successfully receiving the N transmission beams, without a need to perform AGC before each of the N transmission beams. This reduces AGC processing frequency. In comparison with a case in which one AGC symbol is configured before each second reference signal, even if there are a plurality of second reference signals, a same quantity of AGC symbols does not need to be configured, so that a quantity of AGC symbols in a same time unit is reduced, thereby improving resource utilization.

In a possible design, the method further includes: The first UE sends, on a fourth resource of the first time unit by using a fifth transmission beam, information carried by a physical channel. The fourth transmission beam further covers the fifth transmission beam, and the third signal is further used by a UE that receives the information carried by the physical channel to perform AGC.

Therefore, in the beam direction of the fourth transmission beam, the receive power range of the fourth transmission beam is further close to a receive power range of the fifth transmission beam. Therefore, for the UE that receives the third signal, after performing AGC based on the third signal, the UE receives the fifth transmission beam based on an AGC result, to improve a possibility of successfully receiving the fifth transmission beam, without a need to independently perform AGC before the fifth transmission beam. This reduces AGC processing frequency. In addition, there is no need to configure an AGC symbol before a symbol carrying the physical channel, so that a quantity of AGC symbols in a same time unit is reduced, thereby improving resource utilization.

In a possible design, the physical channel includes a physical sidelink control channel PSCCH and/or a physical sidelink shared channel PSSCH.

According to a second aspect, a beam training method is provided. The method may be performed by a first UE, or may be performed by a chip used in the first UE. The following uses an example in which the method is performed by the first UE for description. The method includes: The first UE sends a second reference signal on a second resource of a first time unit by using N transmission beams, where N is a positive integer. The first UE sends a third signal on a third resource of the first time unit by using a fourth transmission beam, where the third signal is used by a UE that receives the second reference signal to perform AGC, and the fourth transmission beam covers each of the N transmission beams.

In a possible design, the method further includes: The first UE sends, on a fourth resource of the first time unit by using a fifth transmission beam, information carried by a physical channel, where the fourth transmission beam further covers the fifth transmission beam, and the third signal is further used by a UE that receives the information carried by the physical channel to perform AGC.

In a possible design, the physical channel includes a PSCCH and/or a PSSCH.

According to a third aspect, a beam training method is provided. The method may be performed by a second UE, or may be performed by a chip used in the second UE. The following uses an example in which the method is performed by the second UE for description. The method includes: The second UE receives first control information sent by a first UE by using a first transmission beam, where the first control information includes resource location information of a first resource, the first resource is used by the first UE to send a first reference signal by using M transmission beams, the first transmission beam is different from each of the M transmission beams, the first transmission beam covers each of the M transmission beams, and M is a positive integer. The second UE performs resource determining based on the first control information.

In a possible design, the first control information further includes beam gain information, and the beam gain information is determined based on a beam gain of the first transmission beam and a beam gain of at least one of the M transmission beams.

In a possible design, the beam gain information includes at least one of the following:

a largest value of differences between the beam gain of the first transmission beam and beam gains of the M transmission beams;

a smallest value of the differences between the beam gain of the first transmission beam and the beam gains of the M transmission beams;

an average value of all the differences between the beam gain of the first transmission beam and the beam gains of the M transmission beams;

a difference between the beam gain of the first transmission beam and a beam gain of one of the M transmission beams;

a largest value of ratios of the beam gain of the first transmission beam to the beam gains of the M transmission beams;

a smallest value of the ratios of the beam gain of the first transmission beam to the beam gains of the M transmission beams;

an average value of all the ratios of the beam gain of the first transmission beam to the beam gains of the M transmission beams; and

a ratio of the beam gain of the first transmission beam to a beam gain of one of the M transmission beams.

In a possible design, the method further includes: The second UE measures a receive power of the first transmission beam. That the second UE performs resource determining based on the first control information includes: The second UE determines a first predicted power based on the beam gain information and the receive power of the first transmission beam, where the first predicted power is related to a predicted receive power of at least one of the M transmission beams. The second UE performs resource determining based on the resource location information of the first resource and the first predicted power.

In other words, the second UE determines the first predicted power based on the beam gain information, to learn the predicted receive power of the at least one of the M transmission beams, so as to determine a degree of interference caused by the M transmission beams to an information receiving and sending process of the second UE, and guide a resource determining process. For example, when the degree of interference caused by the M transmission beams to the information receiving and sending process of the second UE is high, the first resource is not used as a resource for the second UE to perform data transmission. When the degree of interference caused by the M transmission beams to the information receiving and sending process of the second UE is low, the first resource may be used as a resource for the second UE to perform data transmission.

In a possible design, that the second UE performs resource determining based on the resource location information of the first resource and the first predicted power includes: When the first predicted power is greater than a power threshold, the second UE performs resource determining in another resource other than the first resource.

In other words, when the first predicted power is greater than the power threshold, it represents that the degree of interference caused by the M transmission beams to the information receiving and sending process of the second UE is high. Therefore, the second UE performs resource determining in another resource other than the first resource. Therefore, the second UE and the first UE do not perform information transmission on a same time-frequency resource in a spatial multiplexing manner, so that interference caused by the M transmission beams to an information transmission process of the second UE can be reduced, thereby improving information transmission reliability.

In a possible design, the first control information further includes period duration and/or a period repetition quantity of the first resource.

In a possible design, the first control information further includes first indication information, the first indication information indicates that the M transmission beams in a second period are the same as a beam set in a first period, and the second period is later than the first period.

In a possible design, the method further includes: The second UE measures a receive power of each transmission beam in the beam set in the first period. The first period is earlier than a period in which the first resource is located. That the second UE performs resource determining based on the first control information includes: The second UE performs resource determining based on the first control information and the receive power of each transmission beam in the beam set in the first period.

In other words, the second UE determines, based on the receive power of each transmission beam in the beam set in the first period, a degree of interference caused by each transmission beam in the beam set to the information receiving and sending process of the second UE. Because the M transmission beams in the second period are the same as the beam set in the first period, the second UE can also estimate a degree of interference caused by the M transmission beams in the second period to the information receiving and sending process of the second UE, to guide a resource determining process. For example, when the degree of interference caused by the M transmission beams in the second period to the information receiving and sending process of the second UE is high, the first resource is not used as a resource for the second UE to perform data transmission. When the degree of interference caused by the M transmission beams in the second period to the information receiving and sending process of the second UE is low, the first resource may be used as a resource for the second UE to perform data transmission.

In a possible design, when a ratio of a quantity of second transmission beams to M is greater than a first value, or when a quantity of second transmission beams is greater than a second value, the first resource is used as a resource that is recommended not to be used. The second transmission beam is a beam in the beam set in the first period, and a receive power of the second transmission beam is greater than a power threshold.

In other words, there are a large quantity of transmission beams that exceed the power threshold in the M transmission beams, and high interference is easily caused to the information receiving and sending process of the second UE. Therefore, the first resource is used as a resource that is recommended not to be used. Therefore, the second UE and the first UE do not perform information transmission on a same time-frequency resource in a spatial multiplexing manner, so that interference caused by the M transmission beams to an information transmission process of the second UE can be reduced, thereby improving information transmission reliability.

In a possible design, the method further includes: The second UE sends auxiliary information to a fourth UE, where the auxiliary information is used by the fourth UE to determine a resource for data transmission. For example, the auxiliary information includes a recommended resource and/or a resource that is recommended not to be used, so that the fourth UE selects a resource for data transmission with reference to the auxiliary information, to ensure data transmission reliability.

According to a fourth aspect, a beam training method is provided. The method may be performed by a third UE, or may be performed by a chip used in the third UE. The following uses an example in which the method is performed by the third UE for description. The method includes: The third UE receives, on a third resource of a first time unit, a third signal sent by first UE by using a fourth transmission beam. The third UE performs AGC based on the third signal, to obtain an AGC result. The third UE receives, on a second resource of the first time unit based on the AGC result, a second reference signal sent by the first UE by using N transmission beams, where the fourth transmission beam covers each of the N transmission beams.

In a possible design, the method further includes: The third UE receives, on a fourth resource of the first time unit based on the AGC result, information that is carried by a physical channel and that is sent by the first UE by using a fifth transmission beam, where the fourth transmission beam further covers the fifth transmission beam.

In a possible design, the physical channel includes a PSCCH and/or a PSSCH.

According to a fifth aspect, a communication apparatus is provided. The communication apparatus may be the first UE in any one of the first aspect or the possible designs of the first aspect, or a chip that implements a function of the first UE. The communication apparatus includes a corresponding module, unit, or means (means) for implementing the foregoing method. The module, unit, or means may be implemented by hardware, software, or implemented by hardware by executing corresponding software. The hardware or the software includes one or more modules or units corresponding to the foregoing functions.

The communication apparatus includes a processing unit and a sending unit. The processing unit is configured to control the sending unit to send first control information by using a first transmission beam, where the first control information includes resource location information of a first resource. The processing unit is further configured to control the sending unit to send a first reference signal on the first resource by using M transmission beams, where M is a positive integer, the first transmission beam is different from each of the M transmission beams, and the first transmission beam covers each of the M transmission beams.

In a possible design, the first control information further includes beam gain information, and the beam gain information is determined based on a beam gain of the first transmission beam and a beam gain of at least one of the M transmission beams.

In a possible design, the beam gain information includes at least one of the following:

a largest value of differences between the beam gain of the first transmission beam and beam gains of the M transmission beams;
a smallest value of the differences between the beam gain of the first transmission beam and the beam gains of the M transmission beams;
an average value of all the differences between the beam gain of the first transmission beam and the beam gains of the M transmission beams;
a difference between the beam gain of the first transmission beam and a beam gain of one of the M transmission beams;
a largest value of ratios of the beam gain of the first transmission beam to the beam gains of the M transmission beams;
a smallest value of the ratios of the beam gain of the first transmission beam to the beam gains of the M transmission beams;
an average value of all the ratios of the beam gain of the first transmission beam to the beam gains of the M transmission beams; and
a ratio of the beam gain of the first transmission beam to a beam gain of one of the M transmission beams.

In a possible design, the first control information further includes period duration and/or a period repetition quantity of the first resource.

In a possible design, the first control information further includes first indication information, the first indication information indicates that the M transmission beams in a second period are the same as a beam set in a first period, and the second period is later than the first period.

In a possible design, that the first transmission beam covers each of the M transmission beams includes:

a $Y_2$ dB beamwidth of a second transmission beam is included in a $Y_1$ dB beamwidth of the first transmission beam; or
a fifth difference is less than a first threshold, where the fifth difference is an absolute value of a difference between a beam gain of the first transmission beam and a beam gain of a second transmission beam in a beam peak direction of the second transmission beam; or

a sixth difference is less than a second threshold, where the sixth difference is an absolute value of a difference between a beam gain of the first transmission beam and a beam gain of a second transmission beam in a direction within a first range, and the first range is a $Y_3$ dB range of a peak equivalent isotropic radiated power EIRP of the second transmission beam; or

a seventh difference is less than a third threshold, where the seventh difference is an absolute value of a difference between a beam gain of the first transmission beam in a direction within a second range and a beam gain of the first transmission beam in a beam peak direction of the first transmission beam, and the second range is a $Y_4$ dB range of a peak equivalent isotropic radiated power EIRP of a second transmission beam; or

an absolute value of a difference between a first angle and a second angle is less than a fourth threshold, and an absolute value of a difference between a third angle and a fourth angle is less than a fifth threshold, where the first angle is an angle in a first direction corresponding to a precoding codeword of the first transmission beam, the second angle is an angle in a first direction corresponding to a precoding codeword of the second transmission beam, the third angle is an angle in a second direction corresponding to the precoding codeword of the first transmission beam, and the fourth angle is an angle in a second direction corresponding to the precoding codeword of the second transmission beam.

The second transmission beam is each of the M transmission beams.

In a possible design, the processing unit is further configured to determine the first transmission beam based on the M transmission beams.

In a possible design, the first transmission beam is a beam with a smallest $Y_5$ dB beamwidth in a third transmission beam, the third transmission beam meets a first condition, and the first condition includes that a $Y_5$ dB beamwidth of the third transmission beam includes a beam peak direction of each of the M transmission beams.

In a possible design, the resource location information includes at least one of the following: a frame index, a slot index, a symbol index, a quantity of symbols, a sub channel index, a physical resource block PRB index, a resource element RE index, a symbol offset, or a slot offset. The quantity of symbols is a quantity of symbols for sending the first reference signal in a slot. The slot offset is a quantity of offset slots between a slot in which the first reference signal is sent and a slot in which the first control information is sent. The symbol offset is a quantity of offset symbols between a symbol for sending the first reference signal and a symbol for sending the first control information.

In a possible design, the processing unit is further configured to control the sending unit to send a second reference signal on a second resource of a first time unit by using N transmission beams, where N is a positive integer. The processing unit is further configured to control the sending unit to send a third signal on a third resource of the first time unit by using a fourth transmission beam, where the third signal is used by a UE that receives the second reference signal to perform automatic gain control AGC, and the fourth transmission beam covers each of the N transmission beams.

In a possible design, the processing unit is further configured to control the sending unit to send, on a fourth resource of the first time unit by using a fifth transmission beam, information carried by a physical channel, where the fourth transmission beam further covers the fifth transmission beam, and the third signal is further used by a UE that receives the information carried by the physical channel to perform AGC.

In a possible design, the physical channel includes a physical sidelink control channel PSCCH and/or a physical sidelink shared channel PSSCH.

According to a sixth aspect, a communication apparatus is provided. The communication apparatus may be the first UE in any one of the second aspect or the possible designs of the second aspect, or a chip that implements a function of the first UE. The communication apparatus includes a corresponding module, unit, or means (means) for implementing the foregoing method. The module, unit, or means may be implemented by hardware, software, or implemented by hardware by executing corresponding software. The hardware or the software includes one or more modules or units corresponding to the foregoing functions.

The communication apparatus includes a processing unit and a sending unit. The processing unit is configured to control the sending unit to send a second reference signal on a second resource of a first time unit by using N transmission beams, where N is a positive integer. The processing unit is further configured to control the sending unit to send a third signal on a third resource of the first time unit by using a fourth transmission beam, where the third signal is used by a UE that receives the second reference signal to perform automatic gain control AGC, and the fourth transmission beam covers each of the N transmission beams.

In a possible design, the processing unit is further configured to control the sending unit to send, on a fourth resource of the first time unit by using a fifth transmission beam, information carried by a physical channel, where the fourth transmission beam further covers the fifth transmission beam, and the third signal is further used by a UE that receives the information carried by the physical channel to perform AGC.

In a possible design, the physical channel includes a PSCCH and/or a PSSCH.

According to a seventh aspect, a communication apparatus is provided. The communication apparatus may be the second UE in any one of the third aspect or the possible designs of the third aspect, or a chip that implements a function of the second UE. The communication apparatus includes a corresponding module, unit, or means (means) for implementing the foregoing method. The module, unit, or means may be implemented by hardware, software, or implemented by hardware by executing corresponding software. The hardware or the software includes one or more modules or units corresponding to the foregoing functions.

The communication apparatus includes a processing unit, a sending unit, and a receiving unit. The receiving unit is configured to receive first control information sent by first UE by using a first transmission beam, where the first control information includes resource location information of a first resource, the first resource is used by the first UE to send a first reference signal by using M transmission beams, the first transmission beam is different from each of the M transmission beams, the first transmission beam covers each of the M transmission beams, and M is a positive integer. The processing unit is configured to perform resource determining based on the first control information.

In a possible design, the first control information further includes beam gain information, and the beam gain information is determined based on a beam gain of the first transmission beam and a beam gain of at least one of the M transmission beams.

In a possible design, the beam gain information includes at least one of the following:

a largest value of differences between the beam gain of the first transmission beam and beam gains of the M transmission beams;
a smallest value of the differences between the beam gain of the first transmission beam and the beam gains of the M transmission beams;
an average value of all the differences between the beam gain of the first transmission beam and the beam gains of the M transmission beams;
a difference between the beam gain of the first transmission beam and a beam gain of one of the M transmission beams;
a largest value of ratios of the beam gain of the first transmission beam to the beam gains of the M transmission beams;
a smallest value of the ratios of the beam gain of the first transmission beam to the beam gains of the M transmission beams;
an average value of all the ratios of the beam gain of the first transmission beam to the beam gains of the M transmission beams; and
a ratio of the beam gain of the first transmission beam to a beam gain of one of the M transmission beams.

In a possible design, the processing unit is further configured to measure a receive power of the first transmission beam. That the processing unit is configured to perform resource determining based on the first control information includes: determining a first predicted power based on the beam gain information and the receive power of the first transmission beam, where the first predicted power is related to a predicted receive power of at least one of the M transmission beams; and performing resource determining based on the resource location information of the first resource and the first predicted power.

In a possible design, that the processing unit is configured to perform resource determining based on the resource location information of the first resource and the first predicted power includes: when the first predicted power is greater than a power threshold, performing resource determining in another resource other than the first resource.

In a possible design, the first control information further includes period duration and/or a period repetition quantity of the first resource.

In a possible design, the first control information further includes first indication information, the first indication information indicates that the M transmission beams in a second period are the same as a beam set in a first period, and the second period is later than the first period.

In a possible design, the processing unit is further configured to measure a receive power of each transmission beam in the beam set in the first period. The first period is earlier than a period in which the first resource is located. That the processing unit is configured to perform resource determining based on the first control information includes: performing resource determining based on the first control information and the receive power of each transmission beam in the beam set in the first period.

In a possible design, when a ratio of a quantity of second transmission beams to M is greater than a first value, the first resource is used as a resource that is recommended not to be used. Alternatively, when a quantity of second transmission beams is greater than a second value, the first resource is used as a resource that is recommended not to be used. The second transmission beam is a beam in the beam set in the first period, and a receive power of the second transmission beam is greater than a power threshold.

In a possible design, the sending unit is configured to send auxiliary information to a fourth UE, where the auxiliary information is used by the fourth UE to determine a resource for data transmission.

According to an eighth aspect, a communication apparatus is provided. The communication apparatus may be the third UE in any one of the fourth aspect or the possible designs of the fourth aspect, or a chip that implements a function of the third UE. The communication apparatus includes a corresponding module, unit, or means (means) for implementing the foregoing method. The module, unit, or means may be implemented by hardware, software, or implemented by hardware by executing corresponding software. The hardware or the software includes one or more modules or units corresponding to the foregoing functions.

The communication apparatus includes a processing unit and a receiving unit. The receiving unit is configured to receive, on a third resource of a first time unit, a third signal sent by first UE by using a fourth transmission beam. The processing unit is configured to perform automatic gain control AGC based on the third signal. The processing unit is configured to control, based on an AGC result, the receiving unit to receive, on a second resource of the first time unit, a second reference signal sent by the first UE by using N transmission beams, where the fourth transmission beam covers each of the N transmission beams.

In a possible design, the processing unit is further configured to control, based on the AGC result, the receiving unit to receive, on a fourth resource of the first time unit, information that is carried by a physical channel and that is sent by the first UE by using a fifth transmission beam, where the fourth transmission beam further covers the fifth transmission beam.

In a possible design, the physical channel includes a physical sidelink control channel PSCCH and/or a physical sidelink shared channel PSSCH.

According to a ninth aspect, a communication apparatus is provided, including: a processor and a memory. The memory is configured to store computer instructions, and when the processor executes the instructions, the communication apparatus is enabled to perform the method performed by the first UE in any one of any aspect in the foregoing or the possible designs of the any aspect in the foregoing. The communication apparatus may be the first UE in any one of the first aspect or the possible designs of the first aspect, or may be the first UE in any one of the second aspect or the possible designs of the second aspect, or a chip that implements a function of the first UE.

According to a tenth aspect, a communication apparatus is provided, including: a processor. The processor is coupled to a memory, and is configured to read and execute instructions in the memory, to enable the communication apparatus to perform the method performed by the first UE in any one of any aspect in the foregoing or the possible designs of the any aspect in the foregoing. The communication apparatus may be the first UE in any one of the first aspect or the possible designs of the first aspect, or may be the first UE in any one of the second aspect or the possible designs of the second aspect, or a chip that implements a function of the first UE.

According to an eleventh aspect, a chip is provided, including a processing circuit and an input/output interface. The input/output interface is configured to communicate with a module outside the chip. For example, the chip may be a chip that implements a function of the first UE in any one of the first aspect or the possible designs of the first aspect. The processing circuit is configured to run a computer program or instructions, to implement the method in any one of the first aspect or the possible designs of the first aspect. For another example, the chip may be a chip that implements a function of the first UE in any one of the second aspect or the possible designs of the second aspect. The processing circuit is configured to run a computer program or instructions, to implement the method in any one of the second aspect or the possible designs of the second aspect.

According to a twelfth aspect, a communication apparatus is provided, including: a processor and a memory. The memory is configured to store computer instructions, and when the processor executes the instructions, the communication apparatus is enabled to perform the method performed by the second UE in any one of any aspect in the foregoing or the possible designs of the any aspect in the foregoing. The communication apparatus may be the second UE in any one of the third aspect or the possible designs of the third aspect, or a chip that implements a function of the second UE.

According to a thirteenth aspect, a communication apparatus is provided, including: a processor. The processor is coupled to a memory, and is configured to read and execute instructions in the memory, to enable the communication apparatus to perform the method performed by the second UE in any one of any aspect in the foregoing or the possible designs of the any aspect in the foregoing. The communication apparatus may be the second UE in any one of the third aspect or the possible designs of the third aspect, or a chip that implements a function of the second UE.

According to a fourteenth aspect, a chip is provided, including a processing circuit and an input/output interface. The input/output interface is configured to communicate with a module outside the chip. For example, the chip may be a chip that implements a function of the second UE in any one of the third aspect or the possible designs of the third aspect. The processing circuit is configured to run a computer program or instructions, to implement the method in any one of the third aspect or the possible designs of the third aspect.

According to a fifteenth aspect, a communication apparatus is provided, including: a processor and a memory. The memory is configured to store computer instructions, and when the processor executes the instructions, the communication apparatus is enabled to perform the method performed by the third UE in any one of any aspect in the foregoing or the possible designs of the any aspect in the foregoing. The communication apparatus may be the third UE in any one of the fourth aspect or the possible designs of the fourth aspect, or a chip that implements a function of the third UE.

According to a sixteenth aspect, a communication apparatus is provided, including: a processor. The processor is coupled to a memory, and is configured to read and execute instructions in the memory, to enable the communication apparatus to perform the method performed by the third UE in any one of any aspect in the foregoing or the possible designs of the any aspect in the foregoing. The communication apparatus may be the third UE in any one of the fourth aspect or the possible designs of the fourth aspect, or a chip that implements a function of the third UE.

According to a seventeenth aspect, a chip is provided, including a processing circuit and an input/output interface. The input/output interface is configured to communicate with a module outside the chip. For example, the chip may be a chip that implements a function of the third UE in any one of the fourth aspect or the possible designs of the fourth aspect. The processing circuit is configured to run a computer program or instructions, to implement the method in any one of the fourth aspect or the possible designs of the fourth aspect.

According to an eighteenth aspect, a computer-readable storage medium is provided. The computer-readable storage medium stores instructions, and when the instructions are run on a computer, the computer is enabled to perform the method any possible design of any aspect in the foregoing.

According to a nineteenth aspect, a computer program product including instructions is provided. When the instructions are run on a computer, the computer is enabled to perform the method according to any one of the foregoing aspects.

According to a twentieth aspect, a circuit system is provided. The circuit system includes a processing circuit, and the processing circuit is configured to perform the method according to any one of the foregoing aspects.

For technical effects brought by any design of the fifth aspect to the twentieth aspect, refer to beneficial effects in the corresponding methods provided above. Details are not described herein again.

**BRIEF DESCRIPTION OF DRAWINGS**

FIG. 1 is a diagram of an architecture of a communication system to which an embodiment of this application is applied;
FIG. 2 is a diagram of an architecture of another communication system to which an embodiment of this application is applied;
FIG. 3 is a diagram of an architecture of still another communication system to which an embodiment of this application is applied;
FIG. 4 is a diagram of a resource selection scenario according to an embodiment of this application;
FIG. 5 is a diagram of a beam training scenario according to an embodiment of this application;
FIG. 6 is a diagram of another beam training scenario according to an embodiment of this application;
FIG. 7 is a schematic flowchart of a beam training method according to an embodiment of this application;
FIG. 8 is a diagram of still another beam training scenario according to an embodiment of this application;
FIG. 9 is a diagram of a beamwidth according to an embodiment of this application;
FIG. 10a is a diagram of a type of beam coverage according to an embodiment of this application;
FIG. 10b is a diagram of another type of beam coverage according to an embodiment of this application;
FIG. 10c is a diagram of still another type of beam coverage according to an embodiment of this application;
FIG. 10d is a diagram of still another type of beam coverage according to an embodiment of this application;
FIG. 11a is a diagram of a type of resource distribution according to an embodiment of this application;
FIG. 11b is a diagram of another type of resource distribution according to an embodiment of this application;
FIG. 11c is a diagram of still another type of resource distribution according to an embodiment of this application;
FIG. 11d is a diagram of still another type of resource distribution according to an embodiment of this application;
FIG. 11e is a diagram of still another type of resource distribution according to an embodiment of this application;
FIG. 12a is a schematic flowchart of another beam training method according to an embodiment of this application;
FIG. 12b is a schematic flowchart of still another beam training method according to an embodiment of this application;
FIG. 13a is a diagram of still another type of resource distribution according to an embodiment of this application;
FIG. 13b is a diagram of still another type of resource distribution according to an embodiment of this application;
FIG. 14 is a schematic flowchart of still another beam training method according to an embodiment of this application;
FIG. 15 is a diagram of still another type of resource distribution according to an embodiment of this application;
FIG. 16 is a diagram of a structure of a communication apparatus according to an embodiment of this application; and
FIG. 17 is a diagram of a structure of another communication apparatus according to an embodiment of this application.

**DESCRIPTION OF EMBODIMENTS**

In the specification and accompanying drawings of this application, the terms "first", "second", and the like are intended to distinguish between different objects or distinguish between different processing of a same object, but do not indicate a particular order of the objects. In addition, the terms "including" and "having" and any variations thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

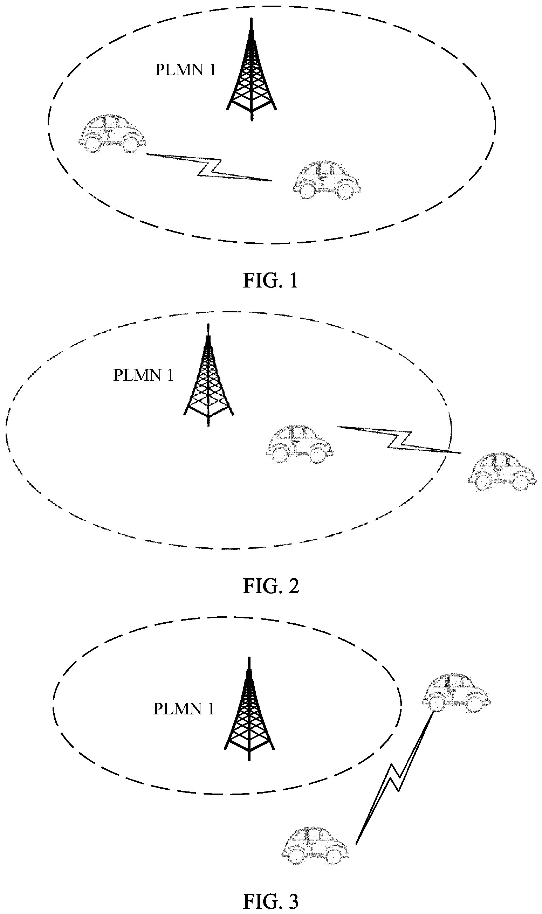

Embodiments of this application are applicable to a system for communication between UEs, for example, a vehicle to everything (vehicle to everything, V2X) communication system or a device to device (device to device, D2D) system. The following uses the V2X communication system as an example to describe a communication system to which embodiments of this application are applicable. Refer to FIG. 1, FIG. 2, and FIG. 3. The communication system includes at least two UEs. The two UEs can directly communicate with each other through a sidelink (sidelink, SL) (only two UEs are shown in each of FIG. 1, FIG. 2, and FIG. 3). Optionally, the communication system further includes a network device. The UE may further communicate with the network device.

The V2X communication system may have the following communication scenarios: vehicle to vehicle (vehicle to vehicle, V2V) communication, vehicle to infrastructure apparatus (vehicle to infrastructure, V2I) communication, vehicle to application server (vehicle to network, V2N) communication, vehicle to mobile terminal of pedestrain (vehicle to pedestrain, V2P) communication, and the like. In the V2X communication system, the UEs directly communicate with each other through the sidelink (sidelink, SL), without a receiving and sending process of the network device. There is no uplink or downlink communication link.

The UE is mainly configured to receive or send data. Specifically, the UE includes a device that provides a voice for a user, includes a device that provides data connectivity for a user, or includes a device that provides a voice and data connectivity for a user. For example, the UE may include a handheld device with a wireless connection function, or a processing device connected to a wireless modem. The UE may communicate with a core network through a radio access network (radio access network, RAN), and exchange a voice or data with the RAN, or exchange a voice and data with the RAN. The UE may include a terminal device, a wireless terminal device, a mobile terminal device, a device-to-device (device-to-device, D2D) terminal device, a vehicle to everything (vehicle to everything, V2X) terminal device, a machine-to-machine/machine-type communication (machine-to-machine/machine-type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user agent (user agent), a user device (user device), or the like. For example, the UE may include a mobile phone (or referred to as a "cellular" phone), a computer having a mobile terminal device, a portable, pocket-sized, handheld, computer built-in mobile apparatus, or the like. For example, the UE is a device like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The UE may further include a limited device, for example, a device with low power consumption, a device with a limited storage capability, or a device with a limited computing capability. For example, the UE includes information sensing devices such as a barcode, a radio frequency identification (radio frequency identification, RFID), a sensor, a global positioning system (global positioning system, GPS), and a laser scanner.

If various UEs described above are located in a vehicle (for example, placed in the vehicle or mounted in the vehicle), the UEs may be all considered as vehicle-mounted terminal devices. For example, the vehicle-mounted terminal devices are also referred to as on-board units (on-board units, OBUs).

In embodiments of this application, the UE may further include a relay (relay). Alternatively, it may be understood as that any device that can perform data communication with the network device may be considered as a UE.

In embodiments of this application, an apparatus configured to implement a function of the UE may be a terminal device, or may be an apparatus, for example, a chip system, that can support the terminal device in implementing the function. The apparatus may be mounted in the UE. In embodiments of this application, the chip system may include a chip, or may include a chip and another discrete component. In the technical solutions provided in embodiments of this application, an example in which the apparatus configured to implement the function of the UE is the UE is used for description.

The network device in embodiments of this application is an apparatus that is deployed in a radio access network and that is configured to provide a wireless communication function. Optionally, the network device may be a device that communicates with a wireless terminal by using one or more cells on an air interface of an access network. An apparatus for implementing a function of the network device may be the network device, or may be an apparatus (for example, a chip in the network device) that supports the network device in implementing the function. Optionally, the network device may perform attribute management on the air interface. The network device may coordinate attribute management of the air interface. The network device includes various forms of macro base stations or micro base stations (also referred to as small cells), such as a relay device of a relay station or a chip of the relay device, a transmission reception point (transmission reception point, TRP), an evolved NodeB (evolved NodeB, eNB), a next-generation network node (g NodeB, gNB), and an evolved NodeB connected to a next-generation core network (ng evolved NodeB, ng-eNB). Alternatively, in a distributed base station scenario, the network device may be a baseband unit (baseband unit, BBU) and a remote radio unit (remote radio unit, RRU). In a cloud radio access network (cloud radio access network, CRAN) scenario, the network device may be a baseband pool (BBU pool) and an RRU.

Refer to FIG. 1, FIG. 2, and FIG. 3. For two UEs that communicate with each other through a sidelink, there may be the following three communication scenarios: First, both the UEs are within a coverage area of a same public land mobile network (public land mobile network, PLMN) (for example, a PLMN 1), which is shown in FIG. 1. Second, only one UE is within a coverage area of a PLMN (for example, the PLMN 1), and the other UE is outside the coverage area of the PLMN (for example, the PLMN 1), which is shown in FIG. 2. Third, both the UEs are outside a coverage area of a PLMN (for example, the PLMN 1), and there is no pre-configured cell identity in an area range in which the two UEs are located, which is shown in FIG. 3. Dashed-line elliptic areas in FIG. 1, FIG. 2, and FIG. 3 all represent the coverage areas of the PLMN 1. Because the two UEs communicate with each other through the sidelink, the two UEs can normally communicate with each other regardless of whether both the UEs are within the coverage area of the PLMN.

The communication system shown in FIG. 1, FIG. 2, and FIG. 3 may be used in a long term evolution (long term evolution, LTE) system or a long term evolution advanced (LTE Advanced, LTE-A) system, or may be used in a 5th generation mobile communication technology (5th generation mobile communication technology, 5G) network or another future network. Certainly, the communication systems may alternatively be used in an LTE and 5G hybrid networking system or another system. This is not specifically limited in embodiments of this application. In different networks, the network device and the UE in the communication system may correspond to different names. A person skilled in the art may understand that the names do not constitute a limitation on the devices.

For ease of understanding embodiments of this application, the following first briefly describes terms in embodiments of this application. It should be understood that these descriptions are merely intended to facilitate understanding of embodiments of this application, and shall not constitute any limitation on this application.

1. Sidelink control information (sidelink control information, SCI)

The SCI is carried in a physical sidelink control channel (physical sidelink control channel, PSCCH). Alternatively, the SCI is classified into $1^{st}$-stage SCI ($1^{st}$-stage SCI) and $2^{nd}$-stage SCI ($2^{nd}$-stage SCI). In embodiments of this application, an example in which the SCI is classified into the $1^{st}$-stage SCI and the $2^{nd}$-stage SCI is used for description. The $1^{st}$-stage SCI is carried in the PSCCH, the $2^{nd}$-stage SCI is carried in a physical sidelink shared channel (physical sidelink shared channel, PSSCH), and the $1^{st}$-stage SCI is used to schedule the $2^{nd}$-stage SCI and data information. An RxUE can decode the PSSCH only after correctly decoding the $1^{st}$-stage SCI. In embodiments of this application, information carried by the PSSCH is described as data channel information. The data channel information includes the data information, the $2^{nd}$-stage SCI, and the like.

The $1^{st}$-stage SCI includes a frequency domain resource assignment (frequency resource assignment) field and a time domain resource assignment (time resource assignment) field. The frequency domain resource assignment field indicates a frequency domain resource of the PSSCH, and the time domain resource assignment field indicates a time domain resource of the PSSCH. Optionally, the $1^{st}$-stage SCI further includes a resource reservation period (resource reservation period) field. The resource reservation period field indicates a period for which the PSSCH reserves a resource. A value of the resource reservation period field is configured by the network device, pre-configured (pre-configuration), or predefined. For example, the network device indicates the time domain resource, the frequency domain resource, and the period of the PSSCH to the UE by using radio resource control (radio resource control, RRC) signaling. Content indicated by the RRC signaling may be determined based on a sidelink resource reservation period (sl-ResourceReservePeriod) field.

The $2^{nd}$-stage SCI is carried in the PSSCH. The $2^{nd}$-stage SCI does not occupy resources of the PSCCH, a demodulation reference signal (demodulation reference signal, DMRS), and a phase tracking reference signal (phase tracking reference signal, PT-RS). The $2^{nd}$-stage SCI is mainly used for hybrid automatic repeat request (hybrid automatic repeat request, HARQ) feedback, for example, indicating related information such as a HARQ process number (process number), a source identifier (source ID), and a destination identifier (destination ID). A format of the $2^{nd}$-stage SCI is indicated by a $2^{nd}$-stage SCI format ($2^{nd}$-stage SCI format) field in the $1^{st}$-stage SCI.

2. SL resource pool (resource pool)

The SL resource pool may be understood as a set of time-frequency resources, and is used for sidelink communication between UEs. Optionally, the SL resource pool further includes a code domain resource. The SL resource pool includes resources for sending and receiving information carried by a physical channel. The physical channel includes at least one of the following: a PSCCH, a PSSCH, a physical sidelink discovery channel (physical sidelink discovery channel, PSDCH), a physical sidelink feedback channel (physical sidelink feedback channel, PSFCH), and a physical sidelink broadcast channel (physical sidelink broadcast channel, PSBCH). The PSCCH is used to carry the 1st-stage SCI. The PSSCH is used to carry the data channel information, for example, at least one of the 2nd-stage SCI, the data information, and feedback information of sidelink channel state information (channel state information, CSI). The PSDCH is used to carry a discovery message. The PSFCH is used to carry sidelink feedback information. The PSBCH is used to carry information related to sidelink synchronization.

The SL resource pool includes one or more time units in time domain. One time unit may be one or more symbols, one or more slots (slots), one or more mini-slots (mini-slots), one or more subframes, one or more frames, or the like. In one SL resource pool, a plurality of time domain units may be continuous or discrete in terms of time.

The SL resource pool includes one or more frequency domain units in frequency domain. One frequency domain unit may be one or more resource elements (resource elements, REs), one or more resource blocks (resource blocks, RBs), or one or more sub channels (sub channels). A size of a sub channel may be understood as a quantity of one or more continuous (continuous) or interlaced (interlaced) RBs in frequency domain included in one sub channel. For example, one sub channel may include 10, 12, 15, 20, 25, or 50 RBs. A name corresponding to an RB at a physical layer is denoted as a physical resource block (physical resource block, PRB).

For definitions of a symbol, a mini-slot, a slot, a subframe, a frame, an RE, an RB, a PRB, and a sub channel in embodiments of this application, refer to related technical specifications of the 3rd generation partnership project (3rd generation partnership project, 3GPP).

3. Transmission mode (mode) and resource selection of SL

There are two resource selection modes in a communication process between the UEs: a resource selection mode (mode) 1 and a resource selection mode 2. The resource selection mode 1 is also referred to as a mode 1 for short, and the resource selection mode 2 is also referred to as a mode 2 for short. In embodiments of this application, only the resource selection mode 1 and the resource selection mode 2 are used as an example for description.

In the resource selection mode 1, a transmission resource of the UE is allocated by the network device, and the UE performs information transmission on the resource allocated by the network device. The network device allocates a single transmission resource to the UE, or may allocate a periodic transmission resource to the UE.

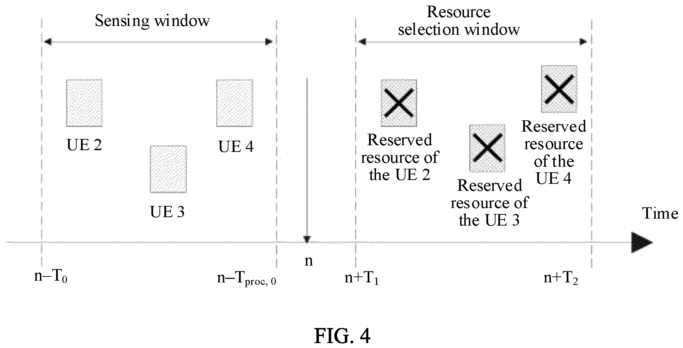

In the resource selection mode 2, the UE determines a transmission resource in a manner of sensing (sensing)+reservation (reservation). The following describes a transmission resource determining process by using a UE 1 as an example. Specific steps are shown in FIG. 4.

Step 1: The UE 1 obtains to-be-sent data information.

For example, refer to FIG. 4. When new data information arrives in a slot $n$ or near the slot $n$, the UE 1 needs to send the data information to another UE to trigger resource selection, that is, determine a resource used for data information transmission.

Step 2: The UE 1 determines a resource selection window (resource selection window).

The resource selection window is preset duration after the slot $n$. For example, refer to FIG. 4. A start slot of the resource selection window is denoted as $n+T_1$, and an end slot of the resource selection window is denoted as $n+T_2$. For value ranges of $T_1$ and $T_2$, refer to a related technology. Details are not described herein again.

Step 3: The UE 1 determines a sensing window (sensing window).

For example, the sensing window is preset duration before the slot $n$, for example, 1000 slots (or $1000 \cdot 2^\mu$ slots). Refer to FIG. 4. A start slot of the sensing window is denoted as $n - T_0$, and an end slot of the sensing window is denoted as $n - T_{proc,0}$. For value ranges of $T_0$ and $T_{proc,0}$, refer to the related technology. Details are not described herein again.

It should be understood that the UE 1 may first perform step 2 and then perform step 3, may first perform step 3 and then perform step 2, or may simultaneously perform step 2 and step 3. This is not limited in embodiments of this application.

Step 4: The UE 1 determines a reserved resource in the resource selection window based on a sensing result of the sensing window.

The sensing result includes at least one of the following: 1st-stage SCI carried in a PSCCH, a measured value of a reference signal received power (reference signal received power, RSRP) of the PSCCH, and a measured value of an RSRP of a PSSCH corresponding to the PSCCH. FIG. 4 is used as an example. A resource occupied by the PSCCH is shown by a box filled by slashes in FIG. 4. The PSCCH includes a PSCCH sent by a UE 2, a PSCCH sent by a UE 3, and a PSCCH sent by a UE 4.

The reserved resource may be periodic or aperiodic. FIG. 4 is used as an example. The 1st-stage SCI indicates that a UE that sends the 1st-stage SCI reserves a time-frequency resource needed for subsequent transmission, which is shown by a box filled by grid lines in FIG. 4. FIG. 4 is used as an example. The reserved resource includes a reserved resource of the UE 2, a reserved resource of the UE 3, and a reserved resource of the UE 4.

For example, all time-frequency resources in the resource selection window form a candidate resource set S_A, and a quantity of resources in the candidate resource set S_A is A.

If the measured value of the RSRP of the PSCCH in the sensing result is greater than an RSRP threshold, and the 1st-stage SCI carried by the PSCCH indicates that the UE that sends the 1st-stage SCI reserves the time-frequency resource needed for subsequent transmission, the UE 1 excludes the reserved resource from the candidate resource set S_A. FIG. 4 is used as an example. If measured values of RSRPs of the PSCCHs sent by the three UEs (namely, the UE 2, the UE 3, and the UE 4) are all greater than the RSRP threshold, the UE 1 excludes the reserved resources of the three UEs (namely, the UE 2, the UE 3, and the UE 4) from the candidate resource set S_A. Alternatively, if the measured value of the RSRP of the PSSCH in the sensing result is greater than an RSRP threshold, and the 1st-stage SCI corresponding to the PSSCH indicates that the UE that sends the 1st-stage SCI reserves the time-frequency resource needed for subsequent transmission, the UE 1 excludes the reserved resource from the candidate resource set S_A.

In this case, it is denoted that a quantity of remaining resources in the candidate resource set S_A is equal to B. If the remaining B resources in the candidate resource set S_A are less than X% of total resources in the resource selection window, the UE 1 increases the RSRP threshold, for example, by 3 dB, until the remaining resources in the candidate resource set S_A are greater than or equal to X% of the total resources in the resource selection window. A value of X% is configured by the resource pool. The UE 1 determines a reserved resource from the remaining resources in the candidate resource set S_A.

Step 5: The UE 1 sends data information on the reserved resource.

It should be noted that the reserved resource may be understood as that some subsequent time-frequency resources reserved by a UE (for example, the UE 1). The UE may receive and send data on the reserved resource, or the UE may not use the reserved resource, that is, the reserved resource has not been used by the UE. This is not limited in embodiments of this application.

4. Beam (beam)

A main problem of high-frequency communication is that signal energy sharply decreases as a transmission distance increases, and this results in a short signal transmission distance. To overcome this problem, a beamforming technology is used in the high-frequency communication. A large-scale antenna array is used for weighted processing, so that signal energy is concentrated in a small range, to form a signal similar to an optical beam (the signal is referred to as a beam), thereby extending a transmission distance.

The beam is a communication resource. The beam may be a wide beam, a narrow beam, or another type of beam. A technology for forming the beam may be a beamforming technology or another technical means. The beamforming technology may be specifically a digital beamforming technology, an analog beamforming technology, or a hybrid digital/analog beamforming technology. Different beams may be considered as different resources. Same information or different information may be sent by using different beams.

The beam may be represented as a spatial domain filter (spatial domain filter), which is also referred to as a spatial filter (spatial filter), referred to as a spatial parameter (spatial parameter), or referred to as a spatial domain parameter. A beam used to send a signal may be referred to as a transmission beam (transmission beam, Tx beam), referred to as a transmit beam, referred to as a spatial domain transmission filter (spatial domain transmission filter), referred to as a spatial transmit parameter (spatial transmission parameter), referred to as a spatial domain transmit parameter, or referred to as a spatial transmission parameter. A beam used to receive a signal may be referred to as a reception beam (reception beam, Rx beam), referred to as a spatial domain receive filter (spatial domain receive filter), referred to as a spatial receive parameter (spatial RX parameter), or referred to as a spatial domain receive parameter. In embodiments of this application, only the transmission beam and the reception beam are used as an example for description. Unified descriptions are provided herein, and details are not described subsequently again.

5. Beamwidth (beamwidth)

In an antenna pattern, a width of an angle between preset power points of a beam is a beamwidth. For example, the preset power point may be a half power point. In this case, the beamwidth may also be referred to as a 3 dB-half-power-beamwidth (half-power-beamwidth, HPBW). In embodiments of this application, a $Y$ dB beam bandwidth of a beam is usually used as an example for description. $Y$ dB includes $Y_1$ dB, $Y_2$ dB, $Y_3$ dB, $Y_4$ dB, and $Y_5$ dB. $Y_1$ dB, $Y_2$ dB, $Y_3$ dB, $Y_4$ dB, and $Y_5$ dB may be the same, for example, 3 dB. Alternatively, at least two of $Y_1$ dB, $Y_2$ dB, $Y_3$ dB, $Y_4$ dB, and $Y_5$ dB are different from each other. For example, $Y_1$ dB and $Y_2$ dB are 3 dB, and $Y_3$ dB, $Y_4$ dB, and $Y_5$ dB are 3.01 dB. For another example, $Y_1$ dB and $Y_2$ dB are 3 dB, $Y_3$ dB and $Y_4$ dB are 3.01 dB, and $Y_5$ dB is 2.99 dB. For still another example, $Y_1$ dB, $Y_2$ dB, $Y_3$ dB, $Y_4$ dB, and $Y_5$ dB are different from each other. This is not limited in embodiments of this application.

A beam with a narrow beamwidth can increase a beam gain and reduce cross-link interference, but increases a radio link failure (radio link failure, RLF) probability and reduces stability of a radio link.

A beam with a wide beamwidth can reduce a probability of beam switching and a beam fault, but increases interference between beams and causes excessively high power consumption. The beamwidth is excessively wide; and therefore accordingly, the beam gain decreases, and a coverage distance of the beam also decreases.

A beam with an optimal beamwidth can improve energy utilization and spectral efficiency, ensure communication quality, and help improve flexibility and robustness of beam tracking.

6. Beam gain

The beam gain indicates a ratio between power densities of signals that are generated by an actual antenna and an ideal antenna at a same point in space when input powers are equal. The ideal antenna is an omnidirectional point source antenna. The beam gain can represent a concentration degree of beam energy. When the input power is fixed, a wider beamwidth indicates a smaller beam gain.

7. Equivalent isotropic radiated power (equivalent isotropic radiated power, EIRP)

The EIRP is a product of a power supplied by a radio transmitter to an antenna and an absolute gain of the antenna in a given direction. The EIRP may also be referred to as an effective isotropic radiated power. In embodiments of this application, only the equivalent isotropic radiated power is used as an example for description. Unified descriptions are provided herein, and details are not described subsequently again.

8. Beam training

The beam training is a process in which different transmission beams or reception beams are switched between a TxUE and an RxUE to measure channel quality, so as to determine a reception and transmission beam pair with good quality. After the beam training, the TxUE and the RxUE communicate with each other by using the reception and transmission beam pair with good quality.

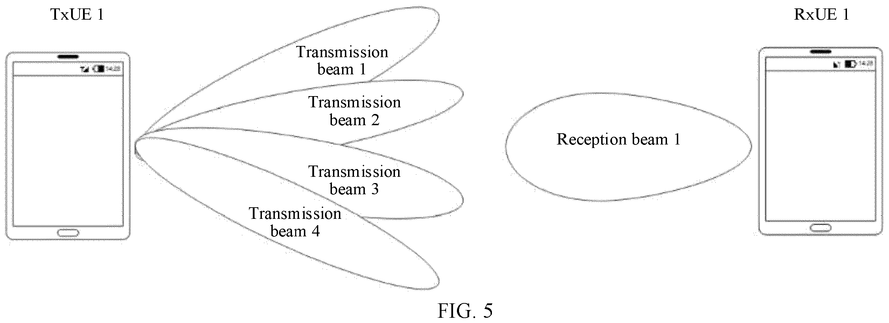

For example, refer to FIG. 5. A beam training process is described by using four transmission beams and four reception beams as an example. A TxUE 1 sends a reference signal to an RxUE 1 by using transmission beams in different directions, for example, a transmission beam 1, a transmission beam 2, a transmission beam 3, and a transmission beam 4. Correspondingly, the RxUE 1 receives, by using a reception beam 1, the reference signal sent by the TxUE 1 by using different transmission beams, so as to determine signal transmission statuses between the reception beam 1 and different transmission beams. Next, the RxUE 1 receives, by using a reception beam 2, the reference signal sent by the TxUE1 by using different transmission beams, to determine signal transmission statuses between the reception beam 2 and different transmission beams. A beam direction of the reception beam 1 is different from a beam direction of the reception beam 2. This is repeated until the reception beams used by the RxUE 1 traverse the reception beam 1, the reception beam 2, a reception beam 3, and a reception beam 4. Then, a reception and transmission beam pair with good quality is determined based on the signal transmission statuses between the transmission beams and the reception beams.

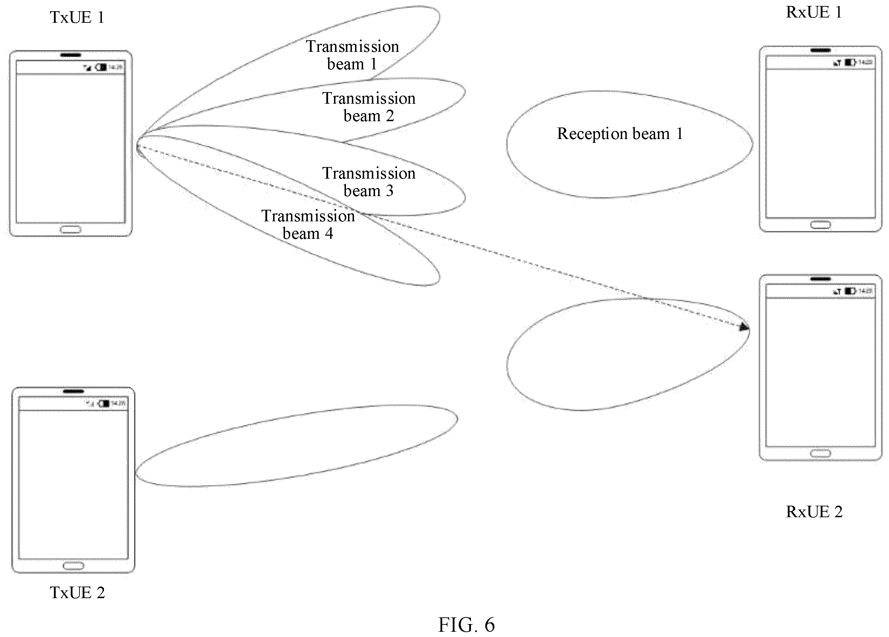

As shown in FIG. 6, a TxUE 1 sends resource reservation indication information by using a transmission beam 1, to indicate a communication resource used by the TxUE 1 for beam training, so that a UE on another communication link does not select the same communication resource. However, if the transmission beam 1 that carries the resource reservation indication information is not aligned with an RxUE 2 on a second communication link, the RxUE 2 on the second communication link cannot receive the resource reservation indication information. Consequently, the communication resource used by the TxUE 1 to perform beam training cannot be excluded. When the RxUE 2 is located in a coverage area of some training beams, for example, a transmission beam 4, of the TxUE 1 in FIG. 6, the transmission beam 4 of the TxUE 1 may cause large interference to the RxUE 2. Consequently, the RxUE 2 cannot correctly receive information, affecting information transmission over the second communication link.

In view of this, embodiments of this application provide a beam training method. The beam training method in embodiments of this application is applied to the communication system in FIG. 1, FIG. 2, or FIG. 3. In the beam training method in embodiments of this application, a first UE sends first control information by using a first transmission beam, where the first control information includes resource location information of a first resource. The first UE sends a first reference signal on the first resource by using M transmission beams, where M is a positive integer, the first transmission beam is different from each of the M transmission beams, and the first transmission beam covers each of the M transmission beams. In this way, for a UE that receives the first control information, the UE determines, based on a beam direction of the first transmission beam, whether the UE is within a coverage area of at least one of the M transmission beams. If the UE is within the coverage area of the at least one of the M transmission beams, the UE that receives the first control information excludes the first resource as much as possible when reserving a resource, to reduce interference caused by a training beam to the UE, and improve information transmission reliability.

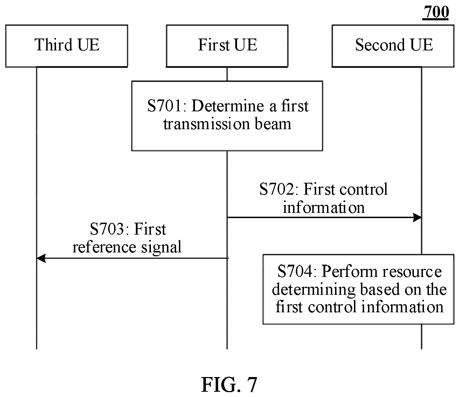

With reference to FIG. 7, the following describes in detail a beam training method 700 provided in an embodiment of this application. In the following embodiments of this application, names of messages between network elements, names of parameters in the messages, or the like are merely an example, and there may be other names during specific implementation. Unified descriptions are provided herein, and details are not described below again.

S701: A first UE determines a first transmission beam.

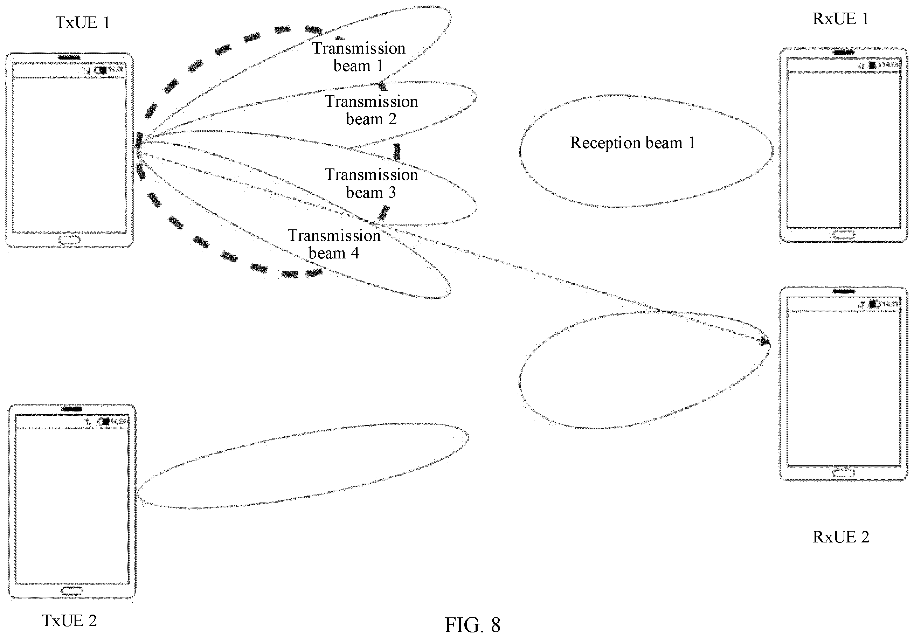

The first UE may be a UE that is to perform beam training. For example, FIG. 8 is used as an example. The first UE may be a TxUE 1 on a first communication link.

The first transmission beam is used to send control information, for example, first control information in S702.

Optionally, an implementation process of S701 includes: The first UE determines the first transmission beam based on M transmission beams.

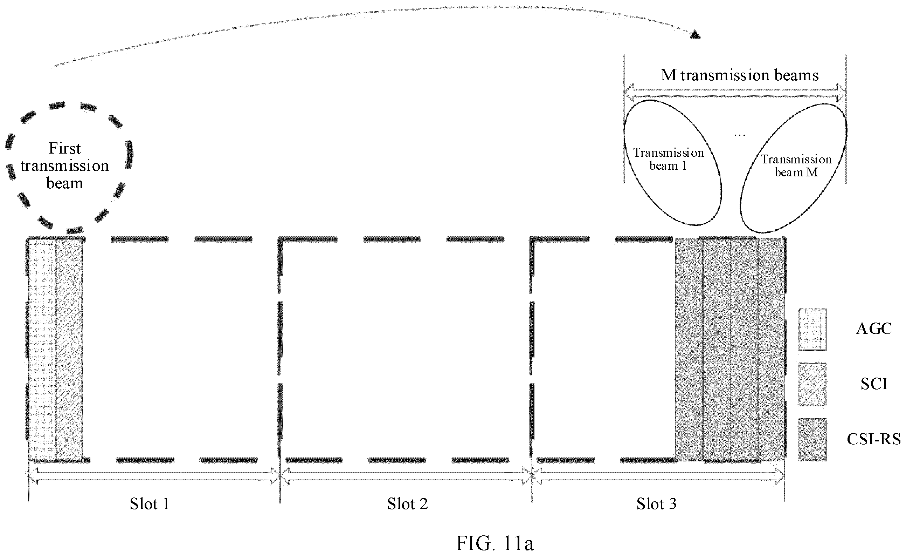

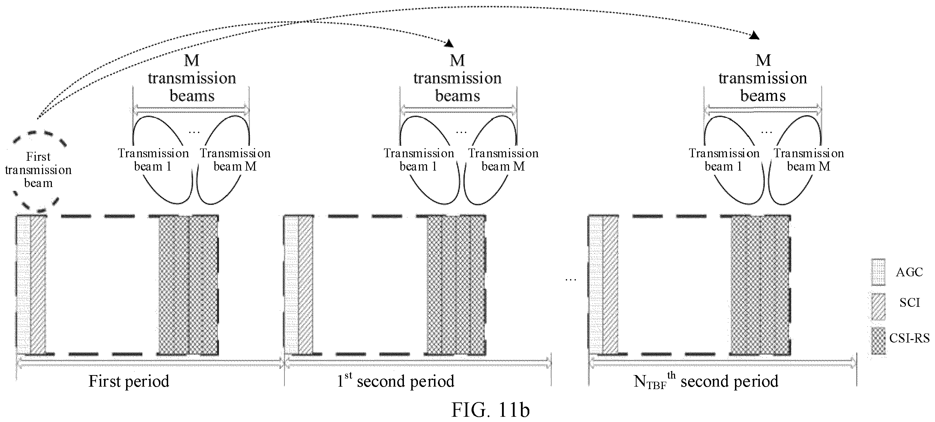

The M transmission beams are used to send a first reference signal. The first reference signal may be a channel state information reference signal (channel state information reference signal, CSI-RS), which is shown in FIG. 11a and FIG. 11b. The first reference signal may alternatively be a reference signal of another name. This is not limited in this embodiment of this application. In other words, the M transmission beams are training beams on which the beam training is to be performed.

For example, the first UE determines the first transmission beam based on the M transmission beams and a first condition. The first transmission beam is a beam with a smallest $Y_5$ dB beamwidth in a third transmission beam. The third transmission beam is a beam that meets the first condition. The first condition includes: A $Y_5$ dB beamwidth of the third transmission beam includes a beam peak direction of a second transmission beam. The second transmission beam is each of the M transmission beams. For example, $Y_5$ dB may be 3 dB.

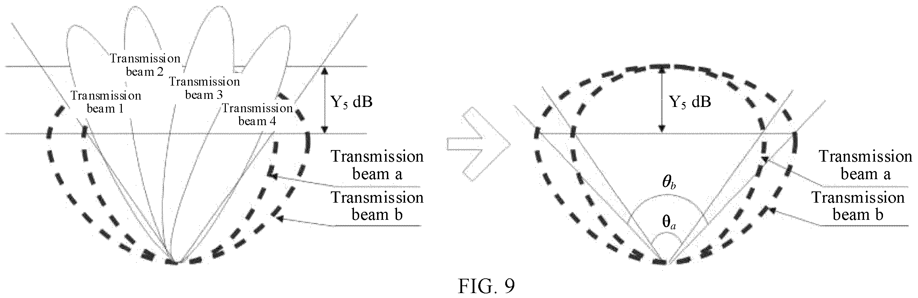

FIG. 9 is used as an example. The M transmission beams include a transmission beam 1, a transmission beam 2, a transmission beam 3, and a transmission beam 4 in FIG. 9. The third transmission beam includes a transmission beam a and a transmission beam b in FIG. 9. To be specific, $Y_5$ dB beamwidths of the transmission beam a and the transmission beam b include beam peak directions of four transmission beams (namely, the transmission beam 1, the transmission beam 2, the transmission beam 3, and the transmission beam 4 in FIG. 9). As shown in FIG. 9, the $Y_5$ dB beamwidth of the transmission beam a is less than the $Y_5$ dB beamwidth of the transmission beam b. Correspondingly, $\theta_a$ is less than $\theta_b$. $\theta_a$ represents the $Y_5$ dB beamwidth of the transmission beam a, and $\theta_b$ represents the $Y_5$ dB beamwidth of the transmission beam b. In this case, the first transmission beam is the transmission beam a in FIG. 9.

It should be noted that the foregoing merely provides an example of a process of determining the first transmission beam. The first UE may alternatively determine the first transmission beam in another manner. This should not be construed as a limitation on embodiments of this application herein. The first transmission beam can cover each of the M transmission beams. FIG. 8 is used as an example. The first transmission beam is shown by a thick dashed-line ellipse at the TxUE 1, the M transmission beams are shown by thin solid-line ellipses at the TxUE 1, and the M transmission beams include four transmission beams such as a transmission beam 1, a transmission beam 2, a transmission beam 3, and a transmission beam 4. Each of the M transmission beams is denoted as a second transmission beam, and covering each of the M transmission beams by the first transmission beam is described below by using the first transmission beam and the second transmission beam as an example in five implementations.

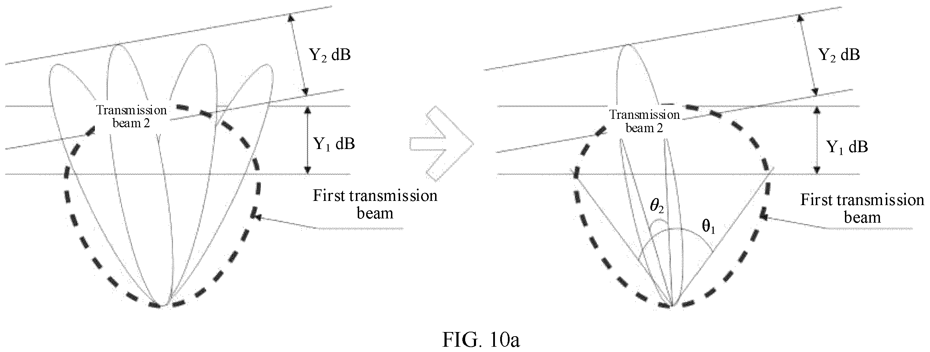

Implementation 1: A $Y_2$ dB beamwidth of the second transmission beam is included in a $Y_1$ dB beamwidth of the first transmission beam. For example, $Y_1$ dB and $Y_2$ dB may be 3 dB. FIG. 10a is used as an example. The first transmission beam is shown by a thick dashed-line ellipse, and the second transmission beam is shown by a thin solid-line ellipse identified by a transmission beam 2. The $Y_2$ dB beamwidth of the second transmission beam and the $Y1$ dB beamwidth of the first transmission beam are shown in FIG. 10a. The $Y_1$ dB beamwidth of the first transmission beam may be represented by using $\theta_1$ in FIG. 10a, and the $Y_2$ dB beamwidth of the second transmission beam may be represented by using $\theta_2$ in FIG. 10a. Refer to FIG. 10a. $\theta_2$ is included in $\theta_1$.

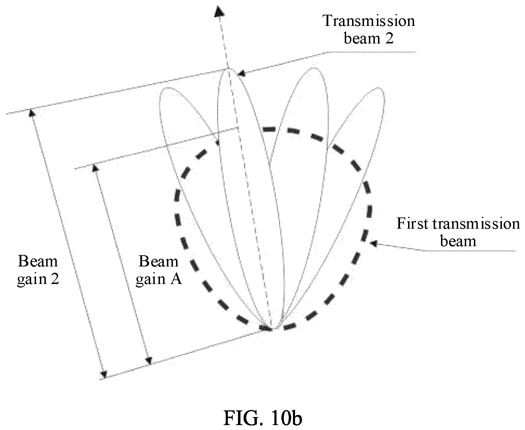

Implementation 2: A fifth difference is less than a first threshold. The fifth difference is an absolute value of a difference between a beam gain of the first transmission beam and a beam gain of a second transmission beam in a beam peak direction of the second transmission beam. FIG. 10b is used as an example. The first transmission beam is shown by a thick dashed-line ellipse, and the second transmission beam is shown by a thin solid-line ellipse identified by a transmission beam 2. In the beam peak direction of the second transmission beam, which is shown by a dashed arrow in FIG. 10b, the beam gain of the first transmission beam in the direction is a beam gain A in FIG. 10b, and the beam gain of the second transmission beam in the direction is a beam gain 2 in FIG. 10b. That is, the fifth difference is an absolute value of a difference between the beam gain A and the beam gain 2.

It should be noted that, in this embodiment of this application, the absolute value of the difference may be understood as that a difference between logarithms of the beam gains is calculated, and then an absolute value is obtained. The absolute value of the difference may be replaced with a difference, or may be replaced with a ratio. This is not limited in this embodiment of this application.

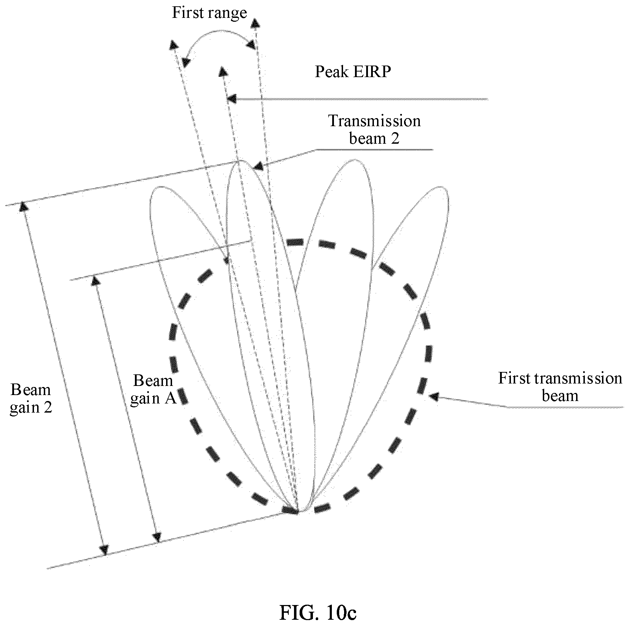

Implementation 3: A sixth difference is less than a second threshold. The sixth difference is an absolute value of a difference between a beam gain of the first transmission beam and a beam gain of a second transmission beam in a direction within a first range, and the first range is a $Y_3$ dB range of a peak EIRP of the second transmission beam. For example, $Y_3$ dB may be 3 dB. FIG. 10c is used as an example. The first transmission beam is shown by a thick dashed-line ellipse, and the second transmission beam is shown by a thin solid-line ellipse identified by a transmission beam 2. The peak EIRP of the second transmission beam and the first range are shown in FIG. 10c. It should be understood that a direction within the first range is a beam peak direction of the second transmission beam. Certainly, there is another direction within the first range, and the direction is different from the beam peak direction of the second transmission beam. A direction in which the peak EIRP of the second transmission beam is located is the same as the beam peak direction of the second transmission beam. The beam gain of the first transmission beam in a direction within the first range is a beam gain A in FIG. 10c, and the beam gain of the second transmission beam in a direction within the first range is a beam gain 2 in FIG. 10c. That is, the sixth difference is an absolute value of a difference between the beam gain A and the beam gain 2.

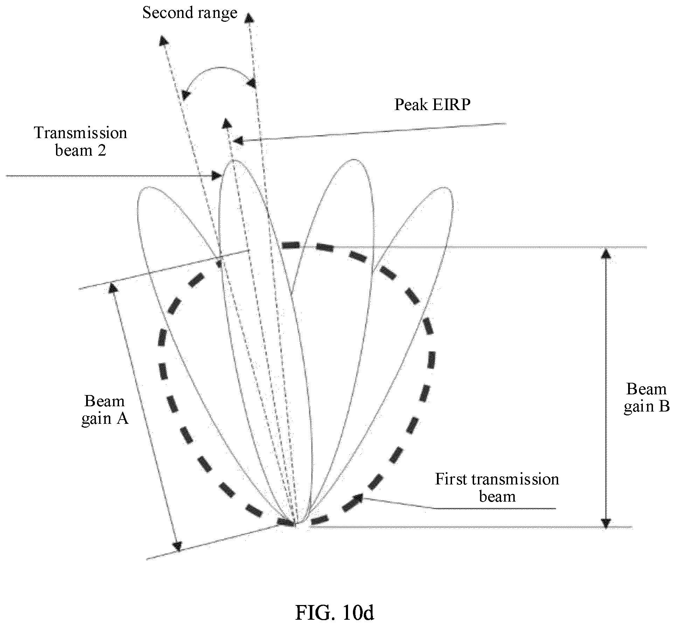

Implementation 4: A seventh difference is less than a third threshold. The seventh difference is an absolute value of a difference between a beam gain of the first transmission beam in a direction within a second range and a beam gain of the first transmission beam in a beam peak direction of the first transmission beam, and the second range is a $Y_4$ dB range of a peak EIRP of a second transmission beam. It should be understood that the second range in the implementation 4 may be the same as or different from the first range in the implementation 3. For example, $Y_4$ dB may also be 3 dB. FIG. 10d is used as an example. The first transmission beam is shown by a thick dashed-line ellipse, and the second transmission beam is shown by a thin solid-line ellipse identified by a transmission beam 2. The peak EIRP of the second transmission beam and the second range are shown in FIG. 10d. It should be understood that the second range includes at least a beam peak direction of the second transmission beam. A peak EIRP direction of the second transmission beam is still used as an example. The beam gain of the first transmission beam in the direction within the second range is a beam gain A in FIG. 10d, and the beam gain of the first transmission beam in the beam peak direction of the first transmission beam is a beam gain B in FIG. 10d. That is, the seventh difference is an absolute value of a difference between the beam gain A and the beam gain B.

Implementation 5: An absolute value of a difference between a first angle and a second angle is less than a fourth threshold, and an absolute value of a difference between a third angle and a fourth angle is less than a fifth threshold. The first angle is an angle in a first direction corresponding to a precoding codeword of the first transmission beam, the second angle is an angle in a first direction corresponding to a precoding codeword of the second transmission beam, the third angle is an angle in a second direction corresponding to the precoding codeword of the first transmission beam, and the fourth angle is an angle in a second direction corresponding to the precoding codeword of the second transmission beam.

For example, precoding is described as follows.

There are a plurality of precoding codebook modes (codebook modes). In different codebook modes, mapping manners from indication parameters (for example, $i_{1,1}$, $i_{1,2}$, $i_{1,3}$, and $i_2$) to codebook parameters (for example, $l$, $m$, and $n$) are different. The following describes a codebook by using an example.

Refer to Table 1. Table 1 shows a codebook in a codebook mode 1.

Parameters of a precoding matrix indicator (precoding matrix indicator, PMI) specifically include $i_{1,1}$, $i_{1,2}$, $i_{1,3}$, and

$$i_1 = \begin{cases} \begin{bmatrix} i_{1,1} & i_{1,2} \end{bmatrix} & \upsilon \notin \{2,3,4\} \\ \begin{bmatrix} i_{1,1} & i_{1,2} & i_{1,3} \end{bmatrix}, & \upsilon \in \{2,3,4\} \end{cases}$$

$i_2$. $\upsilon$ represents a quantity of data layers. When a value of $\upsilon$ is 1, the first UE does not need to feed back the parameter $i_{1,3}$. Table 1 shows a mapping manner from indication parameters (for example, $i_{1,1}$, $i_{1,2}$, and $i_2$) to codebook parameters (for example, $l$, $m$, and $n$) in the codebook mode 1.

**Table 1**

| Codebook mode 1 | | | |
|---|---|---|---|
| $i_{1,1}$ | $i_{1,2}$ | $i_2$ | |
| $0,1,\cdots,N_1O_1 -1$ | $0,\cdots,N_2O_2 -1$ | $0,1,2,3$ | $W^{(1)}_{i_{1,1},i_{1,2},i_2}$ |
| $W^{(1)}_{l,m,n} = \dfrac{1}{\sqrt{P_{CSI-RS}}} \begin{bmatrix} v_{l,m} \\ \varphi_n v_{l,m} \end{bmatrix}$ | | | |

In Table 1, $W^{(1)}_{l,m,n}$ represents a precoding codeword. For calculation processes of $v_{l,m}$ and $\phi_n$, refer to Formula

(1). A value of $i_{1,1}$ is a value in $0,1,\cdots,N_1O_1-1$. A value of $l$ is the same as the value of $i_{1,1}$. A value of $i_{1,2}$ is a value in $0,\cdots,N_2O_2-1$. $N_1$ is a quantity of antenna ports in a first dimension on an antenna panel. The first dimension may be a horizontal (horizontal) dimension, and the horizontal dimension may be denoted as an H dimension. $N_2$ is a quantity of antenna ports in a second dimension on the antenna panel. The second dimension may be a vertical (vertical) dimension, and the vertical dimension may be denoted as a V dimension. $O_1$ is an oversampling factor in the first dimension on the antenna panel. $O_2$ is an oversampling factor in the second dimension on the antenna panel. A value of $m$ is the same as the value of $i_{1,2}$, and a value of $i_2$ is a value in $0, 1, 2, 3$. A value of $n$ is the same as the value of $i_2$. $P_{CSI\text{-}RS}$ indicates a power of a CSI-RS. $v_{l,m}$ and $\phi_n$ satisfy the following Formula (1):

$$
\begin{cases}
\varphi_n = e^{j\pi n/2} \\[2mm]
u_m = \begin{cases}
\begin{bmatrix} 1 & e^{j\frac{2\pi m}{O_2 N_2}} & \cdots & e^{j\frac{2\pi m(N_2-1)}{O_2 N_2}} \end{bmatrix} & N_2 > 1 \\[4mm]
1 & N_2 = 1
\end{cases} \\[4mm]
v_{l,m} = \begin{bmatrix} u_m & e^{j\frac{2\pi l}{O_1 N_1}} u_m & \cdots & e^{j\frac{2\pi l(N_1-1)}{O_1 N_1}} u_m \end{bmatrix}^T
\end{cases}
\quad \text{Formula (1)}
$$

In Formula (1), $N_1$ and $O_1$ satisfy the following formula:

$$\sin\theta_1 * \sin\theta_2 = \frac{1}{N_1 * O_1} \quad \text{Formula (2)}$$

In Formula (1), $N_2$ and $O_2$ satisfy the following formula:

$$\cos\theta_2 = \frac{1}{N_2 * O_2} \quad \text{Formula (3)}$$

Herein, a final effect of selecting a precoding codeword is a beam direction. For different precoding codewords, beams in different directions are correspondingly generated.

The first angle may be $\theta_1$ in the precoding codeword of the first transmission beam, and the third angle may be $\theta_1$ in the precoding codeword of the first transmission beam. The second angle may be $\theta_2$ in the precoding codeword of the second transmission beam, and the fourth angle may be $\theta_2$ in the precoding codeword of the second transmission beam. In other words, in this embodiment of this application, the first direction is a horizontal dimension, and the second direction is a vertical dimension. The horizontal dimension may also be referred to as a horizontal direction. In this embodiment of this application, only the horizontal dimension is used as an example for description. The vertical dimension may also be referred to as a vertical direction. In this embodiment of this application, only the vertical dimension is used as an example for description.

It should be understood that the five thresholds (namely, the first threshold, the second threshold, the third threshold, the fourth threshold, and the fifth threshold) may be pre-configured. Values of the five thresholds (namely, the first threshold, the second threshold, the third threshold, the fourth threshold, and the fifth threshold) may be the same, or at least two of the five thresholds may be different from each other. This is not limited in this embodiment of this application. The first transmission beam and the second transmission beam meet at least one of the five implementations. In addition, only the second transmission beam is used as an example for description above. Because the second transmission beam is each of the M transmission beams, each second transmission beam in the M transmission beams meets the descriptions of the corresponding implementation. For example, when the second transmission beam meets the implementation 1, each second transmission beam (for example, transmission beams other than the transmission beam 2, that is, the transmission beam 1, the transmission beam 3, and the transmission beam 4) of the M transmission beams meets the implementation 1. For another example, when the second transmission beam meets the implementation 2, each second transmission beam (for example, transmission beams other than the transmission beam 2, that is, the transmission beam 1, the transmission beam 3, and the transmission beam 4) of the M transmission beams meets the implementation 2. Other implementations may be deduced by analogy. Details are not described herein again.

For the first UE, after determining the first transmission beam, the first UE performs S702.

S702: The first UE sends first control information by using the first transmission beam. Correspondingly, a second UE receives the first control information sent by the first UE by using the first transmission beam.

It should be understood that the first control information is information sent by the first UE in a broadcast form, and UEs other than the first UE may all receive the first control information. In this embodiment of this application, only the second UE is used as an example to describe a UE that receives the first control information.

The first UE and the second UE are located on different communication links. For example, FIG. 8 is used as an example. The first UE may be the TxUE 1 on the first communication link, and the second UE may be an RxUE 2 on a second communication link.

The first control information includes resource location information of a first resource.

For example, the first control information may be SCI, for example, 1st-stage SCI.

For example, the first resource is a resource for transmission of the first reference signal, and is a reserved resource of the first UE. It should be understood that the first resource may be periodic or aperiodic. For the first reference signal, refer to the descriptions of S701. Details are not described herein again.

For example, the resource location information includes at least one of the following: a frame index, a slot index, a symbol index, a quantity of symbols, a sub channel index, a PRB index, an RE index, a slot offset, or a symbol offset. The frame index is an index of a system frame (system frame, SF) for sending the first reference signal, for example, a system frame number. The slot index is an index of a slot in which the first reference signal is sent. The symbol index is an index of a symbol for sending the first reference signal in a slot. The quantity of symbols is a quantity of symbols for sending the first reference signal in a slot. The sub channel index is an index of a sub channel on which the first reference signal is sent. The PRB index is an index of a PRB for sending the first reference signal. The RE index is an index of an RE for sending the first reference signal. The slot offset is a quantity of offset slots between a slot in which the first reference signal is sent and a slot in which the first control information is sent. The symbol offset is a quantity of offset symbols between a symbol for sending the first reference signal and a symbol for sending the first control information.

The following describes the first control information by using an example 1, an example 2, and an example 3.

Example 1: In addition to the resource location information of the first resource, the first control information further includes beam gain information. The beam gain information is determined based on a beam gain of the first transmission beam and a beam gain of at least one of the M transmission beams. For example, the beam gain information includes at least one of the following:

A first item is a largest value of differences between the beam gain of the first transmission beam and beam gains of the M transmission beams. For example, the beam gain information includes a first difference $X_{max}$, where $X_{max} = max\{X_0, X_1, \cdots, X_i, \cdots, X_{m-1}\}$. $max()$ represents an operator for returning a largest value, and $X_i$ represents an absolute value of a difference between the beam gain of the first transmission beam and a beam gain of an $i^{th}$ transmission beam in the M transmission beams. For example, $X_i$ represents the absolute value of the difference between the beam gain of the first transmission beam and the beam gain of the $i^{th}$ transmission beam in a beam peak direction of the $i^{th}$ transmission beam in the M transmission beams. $i$ is an integer, and 0 to M-1 are traversed.

A second item is a smallest value of the differences between the beam gain of the first transmission beam and the beam gains of the M transmission beams. For example, the beam gain information includes a second difference $X_{min}$, where $X_{min} = min\{X_0, X_1, \cdots, X_i, \cdots, X_{M-1}\}$. $min\{\}$ represents an operator for returning a smallest value. For $X_i$, refer to the descriptions of the first difference Xmax. Details are not described herein again.

A third item is an average value of all the differences between the beam gain of the first transmission beam and the beam gains of the M transmission beams. For example, the beam gain information includes a third difference $X_{avg}$, where $X_{avg} = avg\{X_0, X_1, \cdots, X_i, \cdots, X_{M-1}\}$. $avg\{\}$ represents an operator for returning an average value. For $X_i$, refer to the descriptions of the first difference $X_{max}$. Details are not described herein again.

A fourth item is a difference between the beam gain of the first transmission beam and a beam gain of one of the M transmission beams. For example, the beam gain information includes a fourth difference $X_k$, where k is an integer, and $0 \le k \le M-1$. In other words, $X_k$ is one of $[X_0, X_1, \cdots, X_i, \cdots, X_{M-1}]$. For $X_i$, refer to the descriptions of the first difference $X_{max}$. Details are not described herein again.

A fifth item is a largest value of ratios of the beam gain of the first transmission beam to the beam gains of the M transmission beams. For example, the beam gain information includes a first ratio $Y_{max}$, where $Y_{max} = max\{Y_0, Y_1, \cdots, Y_i, \cdots, Y_{M-1}\}$. $max\{\}$ represents an operator for returning a largest value, and $Y_i$ represents a ratio of the beam gain of the first transmission beam to a beam gain of an $i^{th}$ transmission beam in the M transmission beams. i is an integer, and 0 to M-1 are traversed. For example, $Y_i$ represents the ratio of the beam gain of the first transmission beam to the beam gain of the $i^{th}$ transmission beam in a beam peak direction of the $i^{th}$ transmission beam in the M transmission beams.

A sixth item is a smallest value of the ratios of the beam gain of the first transmission beam to the beam gains of the M transmission beams. For example, the beam gain information includes a second ratio $Y_{min}$, where $Y_{min} = min\{Y_0, Y_1, \cdots, Y_i, \cdots, Y_{M-1}\}$. $min\{\}$ represents an operator for returning a smallest value. For $Y_i$, refer to the descriptions of the first ratio $Y_{max}$. Details are not described herein again.

A seventh item is an average value of all the ratios of the beam gain of the first transmission beam to the beam gains of the M transmission beams. For example, the beam gain information includes a third ratio $Y_{avg}$, where $Y_{avg} = avg\{Y_0, Y_1, \cdots, Y_i, \cdots, Y_{M-1}\}$. $avg\{\}$ represents an operator for returning an average value. For $Y_i$, refer to the descriptions of the first ratio $Y_{max}$. Details are not described herein again.

An eighth item is a ratio of the beam gain of the first transmission beam to a beam gain of one of the M transmission beams. For example, the beam gain information includes a fourth ratio $Y_p$, where $p$ is an integer, and $0 \le p \le M-1$. In other words, $Y_p$ is one of $\{Y_0, Y_1, \cdots, Y_i, \cdots, Y_{M-1}\}$. For $Y_i$, refer to the descriptions of the first ratio $Y_{max}$. Details are not described herein again.

It should be understood that the example 1 is applicable to a case in which the first resource is an aperiodic resource. As shown in FIG. 11a, the first control information is SCI, and the first control information is carried on one or more symbols in a slot 1. The first resource is four symbols in a slot 3, and is used for transmission of a CSI-RS. In other words, the first UE sends the first control information on some symbols in the slot 1 by using the first transmission beam. Then, the first UE sends the CSI-RS on some symbols in the slot 3 by using a transmission beam.

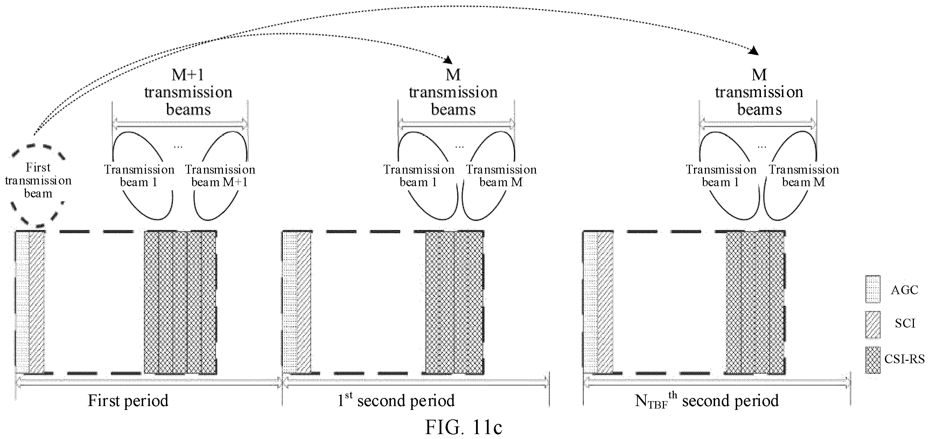

The example 1 is alternatively applicable to a case in which the first resource is a periodic resource. As shown in FIG. 11b or FIG. 11c, the first control information is SCI, and the first control information is carried on one or more symbols in a first period. A period in which the first resource is distributed is described as a second period. The second period is later than the first period. A period repetition quantity of a second period is $N_{TBF}$, and each of the $N_{TBF}$ second periods includes the first resource. A 1st second period is used as an example, and the first resource is some symbols in the period, and is used for transmission of a CSI-RS. In other words, the first UE sends the first control information on some symbols in the first period by using the first transmission beam. Then, the first UE sends the CSI-RS on some symbols in each second period after the first period.

In the example 1, when the first resource is the periodic resource, in a first implementation, in addition to the beam gain information, the first control information further includes period duration and/or a period repetition quantity of the first resource. In other words, the first UE periodically sends the first reference signal by using the M transmission beams. The period duration may be understood as duration of an interval between time at which the first UE sends the first reference signal by using the M transmission beams for an $x^{th}$ time and time at which the first UE sends the first reference signal by using the M transmission beams for an $(x+1)^{th}$ time, where the parameter x is a positive integer. The period repetition quantity may be understood as a quantity of times that the M transmission beams are repeatedly used by the first UE. As shown in FIG. 11b, the period repetition quantity of the second period may be denoted as $N_{TBF}$. $N_{TBF}$ is a positive integer.

It should be understood that the period duration is optional information. For example, the period duration may be pre-configured by a communication system in which the first UE is located. For example, period duration of a period in which every M transmission beams are located during beam training of each UE is pre-configured. In this case, the first control information may not carry the period duration. Similarly, the period repetition quantity is optional information. For example, the period repetition quantity may be pre-configured by the communication system in which the first UE is located. For example, a period repetition quantity of a period in which every M transmission beams are located during beam training of each UE is pre-configured. In this case, the first control information may not carry the period repetition quantity.

It should be noted that when the first control information further includes the period duration and/or the period repetition quantity of the first resource, the communication system in which the first UE is located considers by default that the M transmission beams in the second period are the same as a beam set in the first period. That the M transmission beams in the second period are the same as the beam set in the first period may include the following two cases. Case 1: A quantity of transmission beams in the beam set in the first period is also M, which is shown in FIG. 11b. In this case, a quantity of transmission beams that are in each second period after the first period and that are used to send the first reference signal is the same as the quantity of transmission beams in the beam set in the first period, and both the quantities are M. Case 2: The quantity of transmission beams in the beam set in the first period is greater than M, which is shown in FIG. 11c, and the quantity of beams is M+1. In this case, the quantity of transmission beams that are in each second period after the first period and that are used to send the first reference signal is less than the quantity of transmission beams in the beam set in the first period.

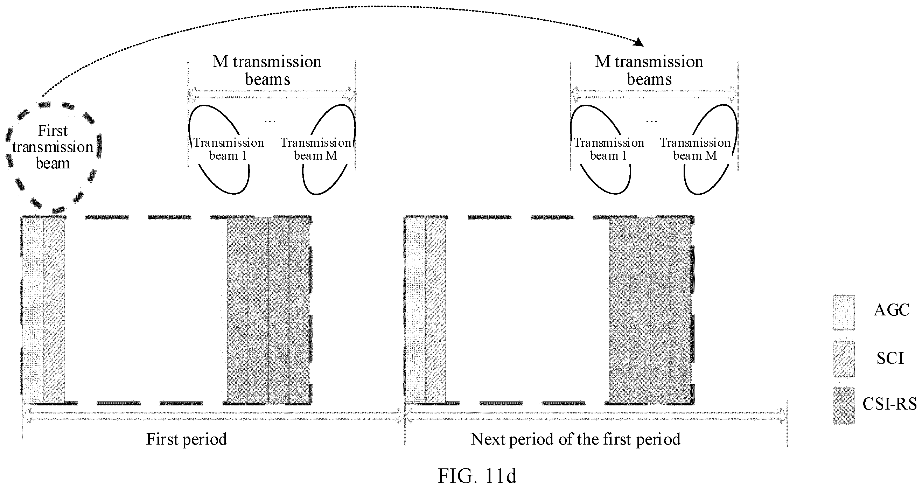

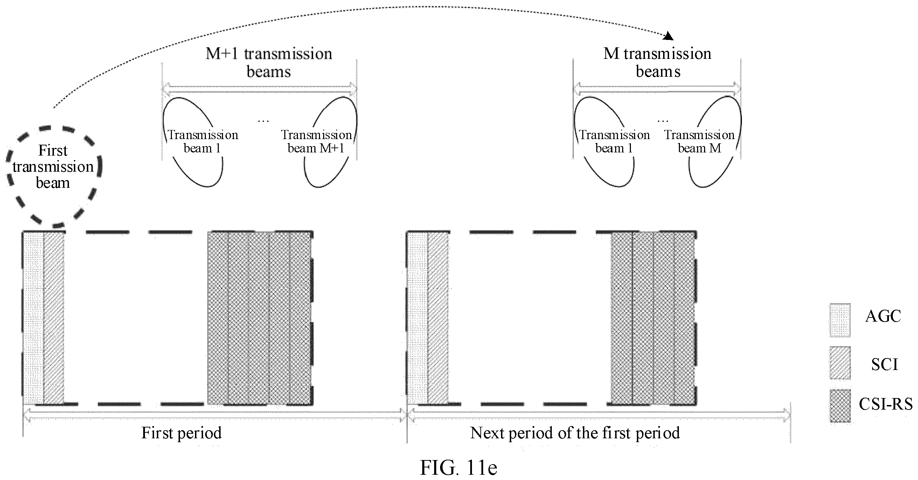

In the example 1, when the first resource is the periodic resource, in a second implementation, in addition to the beam gain information, the first control information further includes indication information 1. The indication information 1 indicates that M transmission beams in a next period of the first period are the same as the beam set in the first period. That the M transmission beams in the next period of the first period are the same as the beam set in the first period may include the following two cases. Case 1: A quantity of transmission beams in the beam set in the first period is also M, which is shown in FIG. 11d. In this case, a quantity of transmission beams that are in the next period of the first period and that are used to send the first reference signal is the same as the quantity of transmission beams in the beam set in the first period, and both the quantities are M. Case 2: The quantity of transmission beams in the beam set in the first period is greater than M, which is shown in FIG. 11e, and the quantity of beams is M+1. In this case, the quantity of transmission beams that are in the next period of the first period and that are used to send the first reference signal is less than the quantity of transmission beams in the beam set in the first period.

It should be understood that, when the first control information further includes the indication information 1, the period repetition quantity is 1 by default. The period duration may be pre-configured by a communication system in which the first UE is located. For example, period duration of a period in which every M transmission beams are located during beam training of each UE is pre-configured. In this case, the first control information may not carry the period duration.

It should be noted that when the first resource is the periodic resource, the first period is a period before the second period in which the first resource is located. The first period includes a transmission resource of the first control information and a transmission resource of the beam set. The beam set in the first period is used for beam training.

Example 2: In addition to the resource location information of the first resource, the first control information further includes period duration and/or a period repetition quantity of the first resource. For the period duration and the period repetition quantity, refer to the descriptions of the first implementation in the example 1. Details are not described herein again.

It should be understood that the example 2 is applicable to the case in which the first resource is the periodic resource, and the period repetition quantity may be one or more. This is not limited in this embodiment of this application. In this case, each of $N_{TBF}$ second periods after the first period includes the first resource.

Example 3: In addition to the resource location information of the first resource, the first control information further includes indication information 1. For the indication information 1, refer to the descriptions of the second implementation in the example 1. Details are not described herein again.

It should be understood that the example 3 is applicable to the case in which the first resource is the periodic resource, and the period repetition quantity is one. In this case, a next period of the first period includes the first resource.

It should be noted that, compared with the first control information in the example 1, in the example 2 and the example 3, the first control information does not carry the beam gain information.

S703: The first UE sends a first reference signal to a third UE on the first resource by using the M transmission beams. Correspondingly, the third UE receives, on the first resource, the first reference signal sent by the first UE by using the M transmission beams.

The M transmission beams in S703 are consistent with the M transmission beams in S701. Details are not described herein again.

For example, refer to FIG. 11a. The first resource is four symbols in the slot 3. The first UE sends the first reference signal to the third UE on the first resource by using four transmission beams. Correspondingly, the third UE receives, on the first resource, the first reference signal sent by the first UE by using the four transmission beams.

For another example, refer to FIG. 11b or FIG. 11c. The first resource is a symbol in each second period. A quantity of second periods is $N_{TBF}$. The first UE sends the first reference signal to the third UE on the first resource in each second period by using four transmission beams. Correspondingly, the third UE receives, on the first resource in each second period, the first reference signal sent by the first UE by using the four transmission beams.

For the third UE, the third UE detects the first reference signal. The period duration may be understood as a time interval at which the third UE detects the first reference signal every two adjacent times. The period repetition quantity may be understood as a quantity of periods in which the third UE repeatedly detects the first reference signal.

It should be noted that, for the first UE, the first UE first performs S702, and then performs S703, to avoid interference caused by a training beam to an information receiving and sending process of another UE.

For the second UE, after receiving the first control information, the second UE performs S704.

S704: The second UE performs resource determining based on the first control information.

The first control information in S704 is consistent with the first control information in S702, and the second UE in S704 is consistent with the second UE in S702. Details are not described herein again.

The following describes an implementation process of S704 by using an implementation 1 and an implementation 2.

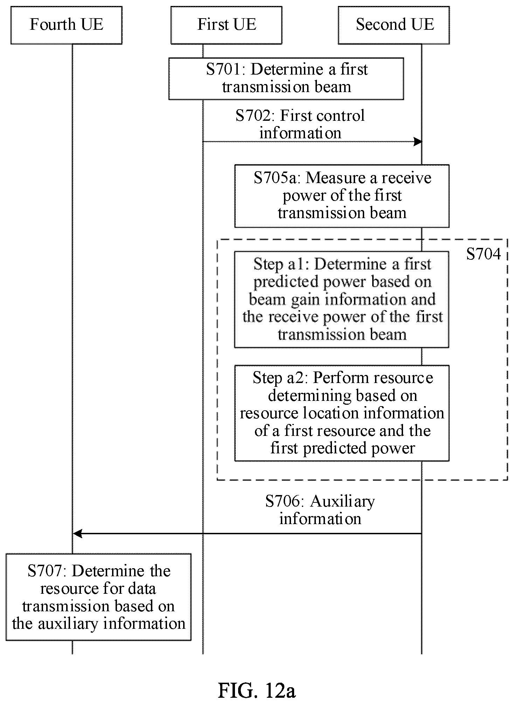

Implementation 1: As shown in FIG. 12a, the second UE further performs S705a.

S705a: The second UE measures a receive power of the first transmission beam.

For example, the first transmission beam has an energy loss in a transmission process. For the second UE, the second UE measures the receive power of the first transmission beam at a location of the second UE, and records the power as Pa.

In the implementation 1, as shown in FIG. 12a, S704 includes step a1 and step a2.

Step a1: The second UE determines a first predicted power based on the beam gain information and the receive power of the first transmission beam.

The first predicted power is related to a predicted receive power of at least one of the M transmission beams.

For example, when the beam gain information includes the first difference $X_{max}$, the first predicted power Pb satisfies the following formula:

$$Pb = Pa + X_{max} \quad \text{Formula (4)}$$

Pb represents the first predicted power, Pa represents the receive power of the first transmission beam, and $X_{max}$ represents the beam gain information. In Formula (4), the first predicted power represents a minimum value of a predicted receive power of one of the M transmission beams.

For example, when the beam gain information includes the second difference $X_{min}$, the first predicted power Pb satisfies the following formula:

$$Pb=Pa+X_{min} \quad \text{Formula (5)}$$

Pb represents the first predicted power, Pa represents the receive power of the first transmission beam, and $X_{min}$ represents the beam gain information. In Formula (5), the first predicted power represents a maximum value of a predicted receive power of one of the M transmission beams.

For example, when the beam gain information includes the third difference $X_{avg}$, the first predicted power Pb satisfies the following formula:

$$Pb=Pa+X_{avg} \quad \text{Formula (6)}$$

Pb represents the first predicted power, Pa represents the receive power of the first transmission beam, and $X_{avg}$ represents the beam gain information. In Formula (6), the first predicted power represents an average value of predicted receive powers of the M transmission beams.

For example, when the beam gain information includes the fourth difference $X_k$, the first predicted power Pb satisfies the following formula:

$$Pb=Pa+X_k \quad \text{Formula (7)}$$

Pb represents the first predicted power, Pa represents the receive power of the first transmission beam, and $X_k$ represents the beam gain information. In Formula (7), the first predicted power represents a predicted receive power of one of the M transmission beams.

For example, when the beam gain information includes the first ratio $Y_{max}$, the first predicted power Pb satisfies the following formula:

$$Pb=Pa*Y_{max} \quad \text{Formula (8)}$$

Pb represents the first predicted power, Pa represents the receive power of the first transmission beam, and $Y_{max}$ represents the beam gain information. In Formula (8), the first predicted power represents a maximum value of a predicted receive power of one of the M transmission beams.

For example, when the beam gain information includes the second ratio $Y_{min}$, the first predicted power Pb satisfies the following formula:

$$Pb=Pa*Y_{min} \quad \text{Formula (9)}$$

Pb represents the first predicted power, Pa represents the receive power of the first transmission beam, and $Y_{min}$ represents the beam gain information. In Formula (9), the first predicted power represents a minimum value of a predicted receive power of one of the M transmission beams.

For example, when the beam gain information includes the third ratio $Y_{avg}$, the first predicted power Pb satisfies the following formula:

$$Pb=Pa*Y_{avg} \quad \text{Formula (10)}$$

Pb represents the first predicted power, Pa represents the receive power of the first transmission beam, and $Y_{avg}$ represents the beam gain information. In Formula (10), the first predicted power represents an average value of predicted receive powers of the M transmission beams.

For example, when the beam gain information includes the fourth ratio $Y_p$, the first predicted power Pb satisfies the following formula:

$$Pb = Pa * Y_p \quad \text{Formula (11)}$$

Pb represents the first predicted power, Pa represents the receive power of the first transmission beam, and $Y_p$ represents the beam gain information. In Formula (11), the first predicted power represents a predicted receive power of one of the M transmission beams.

It should be noted that, when the beam gain information includes a value, for example, one of the first difference, the second difference, the third difference, the fourth difference, the first ratio, the second ratio, the third ratio, and the fourth ratio, the second UE determines the first predicted power according to a formula corresponding to the value. When the beam gain information includes at least two values, for example, two or more values of the first difference, the second difference, the third difference, the fourth difference, the first ratio, the second ratio, the third ratio, and the fourth ratio, the second UE determines the first predicted power according to a formula corresponding to the beam gain information. In this case, the second UE also determines at least two Pb by using the formula. The second UE may randomly select one of the at least two Pb as the first predicted power, or the second UE uses an average value of the at least two Pb as the first predicted power. This is not limited in this embodiment of this application.

Step a2: The second UE performs resource determining based on the resource location information of the first resource and the first predicted power.

For example, the first resource may be an aperiodic resource or a periodic resource. When the first resource is the aperiodic resource, the first predicted power represents a predicted receive power related to at least one of the M transmission beams on the periodic first resource. When the first resource is the periodic resource, the first predicted power represents a predicted receive power related to at least one of the M transmission beams. In this case, the M transmission beams are transmission beams in each of $N_{TBF}$ second periods.

For example, when the first predicted power is greater than a power threshold, the second UE performs resource determining in another resource other than the first resource. In other words, the second UE excludes the first resource from the candidate resource set S_A. The first resource is used as a resource that is recommended not to be used.

On the contrary, when the first predicted power is less than or equal to the power threshold, the candidate resource set S_A includes the first resource, and the second UE performs resource determining in the candidate resource set S_A including the first resource. In other words, the first resource is used as a recommended resource.

It should be noted that the implementation 1 is applicable to the case in which the first control information further includes the beam gain information in addition to the resource location information of the first resource.

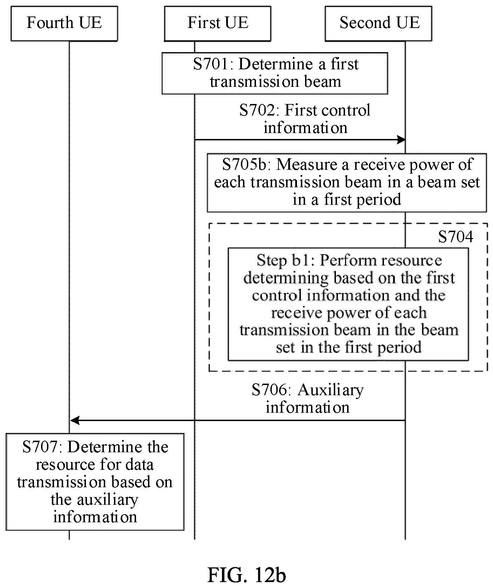

Implementation 2: As shown in FIG. 12b, the second UE further performs S705b.

S705b: The second UE measures a receive power of each transmission beam in the beam set in the first period.

For example, refer to FIG. 11b. A quantity of transmission beams in the beam set in the first period is M. The second UE measures the receive power of each of the M transmission beams in the first period. The receive powers are respectively denoted as $Pc_1$, $Pc_2$, ..., and $Pc_M$.

For another example, refer to FIG. 11c. A quantity of transmission beams in the beam set in the first period is M+1. The second UE measures the receive power of each of the M+1 transmission beams in the first period. The receive powers are respectively denoted as $Pc_1$, $Pc_2$, ..., $Pc_M$, and $Pc_{M+1}$.

In the implementation 2, as shown in FIG. 12b, S704 includes step b1.

Step b1: The second UE performs resource determining based on the first control information and the receive power of each transmission beam in the beam set in the first period.

For example, a beam whose receive power is greater than a power threshold in the beam set in the first period is described as a sixth transmission beam.

In an example A of the implementation 2, in addition to the resource location information of the first resource, the first control information further includes period duration and/or a period repetition quantity of the first resource.

In a possible implementation, when a ratio of a quantity of sixth transmission beams to M is greater than a first value, the first resource in each of $N_{TBF}$ second periods is used as a resource that is recommended not to be used. The second UE performs resource determining in another resource other than the first resource. In other words, the second UE excludes the first resource from the candidate resource set S_A. On the contrary, when the ratio of the quantity of sixth transmission beams to M is less than or equal to the first value, the candidate resource set S_A includes the first resource, and the second UE performs resource determining in the candidate resource set S_A including the first resource. In other words, the first resource is used as a recommended resource.

In another possible implementation, when a quantity of sixth transmission beams is greater than a second value, the first resource in each of $N_{TBF}$ second periods is used as a resource that is recommended not to be used. The second UE performs resource determining in another resource other than the first resource. In other words, the second UE excludes the first resource from the candidate resource set S_A. On the contrary, when the quantity of sixth transmission beams is less than or equal to the second value, the candidate resource set S_A includes the first resource, and the second UE performs resource determining in the candidate resource set S_A including the first resource. In other words, the first resource is used as a recommended resource.

Similarly, in an example B of the implementation 2, in addition to the resource location information of the first resource, the first control information further includes indication information 1. The indication information 1 indicates that M transmission beams in a next period of the first period are the same as the beam set in the first period.

In a possible implementation, when a ratio of a quantity of sixth transmission beams to M is greater than a first value, the first resource in the next period of the first period is used as a resource that is recommended not to be used. The second UE performs resource determining in another resource other than the first resource. In other words, the second UE excludes the first resource from the candidate resource set S_A. On the contrary, when the ratio of the quantity of sixth transmission beams to M is less than or equal to the first value, the candidate resource set S_A includes the first resource, and the second UE performs resource determining in the candidate resource set S_A including the first resource. In other words, the first resource is used as a recommended resource.

In another possible implementation, when a quantity of sixth transmission beams is greater than a second value, the first resource in the next period of the first period is used as a resource that is recommended not to be used. The second UE performs resource determining in another resource other than the first resource. In other words, the second UE excludes the first resource from the candidate resource set S_A. On the contrary, when the quantity of sixth transmission beams is less than or equal to the second value, the candidate resource set S_A includes the first resource, and the second UE performs resource determining in the candidate resource set S_A including the first resource. In other words, the first resource is used as a recommended resource.

For the second UE, after performing resource determining, the second UE performs S706.

S706: The second UE sends auxiliary information to a fourth UE. Correspondingly, the fourth UE receives the auxiliary information from the second UE.

The auxiliary information includes a recommended resource, and/or the auxiliary information includes a resource that is recommended not to be used.

The second UE and the fourth UE are located on a same communication link. For example, FIG. 8 is used as an example. The second UE may be the RxUE 2 on the second communication link, and the fourth UE may be a TxUE 2 on the second communication link.

S707: The fourth UE determines a resource for data transmission based on the auxiliary information.

For example, when the auxiliary information includes the recommended resource, the fourth UE may determine the resource for data transmission from the resource indicated by the auxiliary information. When the auxiliary information includes the resource that is recommended not to be used, the fourth UE may determine the resource for data transmission from a resource other than the resource indicated by the auxiliary information.

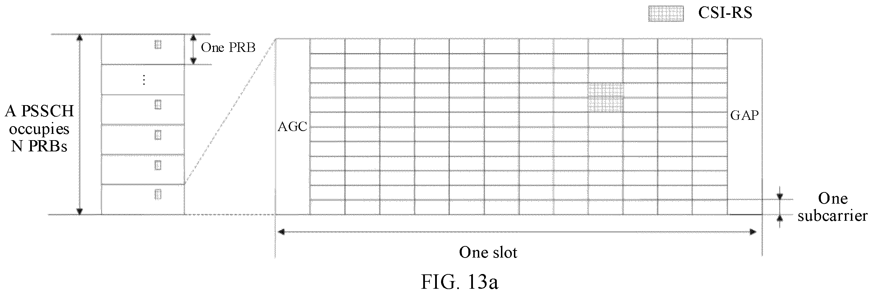

In addition, in a beam training process, a reference signal and a PSSCH are sent together. As shown in FIG. 13a, it is assumed that the PSSCH sent by the TxUE 1 occupies N PRBs. One PRB includes 12 subcarriers. The reference signal is a CSI-RS. A sequence of the CSI-RS is mapped to each of the N PRBs in which the PSSCH is located, and occupies only one symbol of a slot in which the PSSCH is located. When a quantity of antenna ports of the TxUE 1 is 1, the sequence of the CSI-RS occupies one RE in each PRB. When the quantity of antenna ports of the TxUE 1 is 2, the sequence of the CSI-RS occupies two REs in each PRB, which is shown in FIG. 13a. When receiving the PSSCH, the RxUE 1 performs measurement on a resource on which the CSI-RS is located, and then reports a measurement result to the TxUE 1. However, in the foregoing processing process, there is one trainable beam direction in each slot, resulting in low beam training efficiency and a long delay.

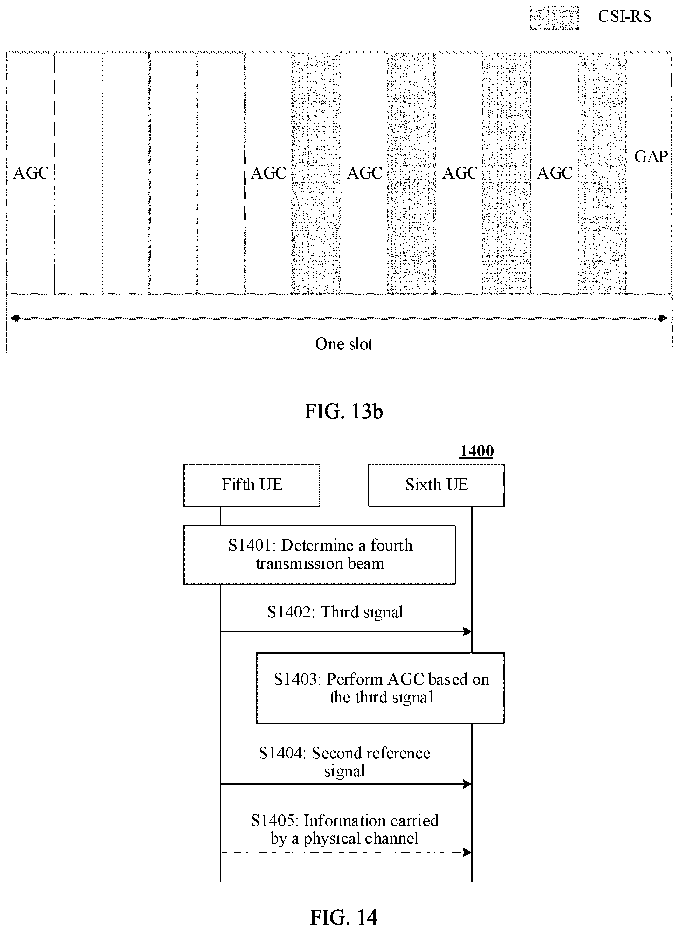

To improve the beam training efficiency, the CSI-RS may be sent on a plurality of symbols in a slot, to perform beam switching on different symbols, so as to train beams in different directions. As shown in FIG. 13b, when the TxUE 1 switches transmission beams on different symbols in a slot, a difference between receive powers of the RxUE 1 on different symbols may be excessively large. Therefore, an automatic gain control (automatic gain control, AGC) symbol is configured before a symbol for transmission of each CSI-RS, to ensure that the RxUE correctly receives the CSI-RS. However, one slot includes a plurality of AGC symbols, resulting in low resource utilization. For an RxUE, AGC needs to be frequently performed. Consequently, processing complexity of the RxUE is high.

In view of this, embodiments of this application provide another beam training method. The beam training method in embodiments of this application is applied to the communication system in FIG. 1, FIG. 2, or FIG. 3. In the beam training method in embodiments of this application, a fifth UE sends a second reference signal on a second resource of a first time unit by using N transmission beams, where N is a positive integer. Then, the fifth UE sends a third signal on a third resource of the first time unit by using a fourth transmission beam, where the third signal is used by a UE that receives the second reference signal to perform AGC, and the fourth transmission beam covers each of the N transmission beams. In this way, in a beam direction of the fourth transmission beam, a receive power range of the fourth transmission beam is close to a receive power range of each of the N transmission beams. Therefore, for a UE that receives the third signal, after performing AGC based on the third signal, the UE receives each of the N transmission beams based on an AGC result, to improve a possibility of successfully receiving the N transmission beams, without a need to perform AGC before each of the N transmission beams. This reduces AGC processing frequency. In comparison with a case in which one AGC symbol is configured before each second reference signal, even if there are a plurality of second reference signals in embodiments of this application, a same quantity of AGC symbols does not need to be configured, so that a quantity of AGC symbols in a same time unit is reduced, thereby improving resource utilization.

With reference to FIG. 14, the following describes in detail a beam training method 1400 provided in an embodiment of this application. In the following embodiments of this application, names of messages between network elements, names of parameters in the messages, or the like are merely an example, and there may be other names during specific implementation. Unified descriptions are provided herein, and details are not described below again.

S1401: A fifth UE determines a fourth transmission beam.

The fourth transmission beam is used to send a third signal, and the third signal is used by a UE that receives the third signal to perform AGC. For details, refer to descriptions of S1403. Details are not described herein again.

Optionally, an implementation process of S1401 includes: The fifth UE determines the fourth transmission beam based on N transmission beams. For S1401, refer to the descriptions of S701. Details are not described herein again. A difference between S701 and S1401 lies in that the fourth transmission beam covers each of the N transmission beams. The N transmission beams are training beams of the fifth UE when the fifth UE is to perform beam training. A value of N may be the same as or different from a value of M. The fifth UE determines the fourth transmission beam with reference to the N transmission beams.

S1402: The fifth UE sends a third signal to a sixth UE on a third resource of a first time unit by using the fourth transmission beam. Correspondingly, the sixth UE receives, on the third resource of the first time unit, the third signal sent by the fifth UE by using the fourth transmission beam.

The fifth UE and the sixth UE are UEs on a same communication link. FIG. 8 is used as an example. The fifth UE may be the TxUE 1, and the sixth UE is the RxUE 1. Alternatively, the fifth UE may be the TxUE 2, and the sixth UE is the RxUE 2.

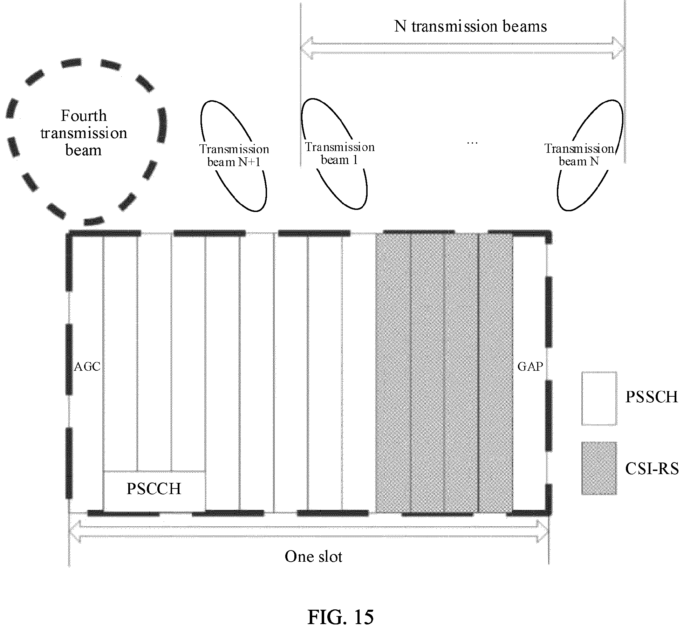

For example, the first time unit may be a frame, a subframe, a slot, or a mini-slot. In this embodiment of this application, only an example in which the first time unit is the slot is used for description. The third resource is a $1^{st}$ symbol in the slot, which is shown in FIG. 15.

For the sixth UE, after receiving the third signal, the sixth UE performs S1403.

S1403: The sixth UE performs AGC based on the third signal.

For example, the sixth UE adjusts an amplification coefficient of a receiver of the sixth UE based on a signal strength of the third signal.

For the fifth UE, after sending the third signal, the fifth UE performs S1404.

S1404: The fifth UE sends a second reference signal to the sixth UE on a second resource of the first time unit by using the N transmission beams in S1401. Correspondingly, the sixth UE receives, on the second resource of the first time unit based on an AGC result, the second reference signal sent by the fifth UE by using the N transmission beams.

For example, the second resource is four symbols for transmission of a CSI-RS in the slot, which is shown in FIG. 15.

For example, for the sixth UE, the sixth UE receives, on the second resource of the first time unit by using the amplification coefficient determined in S1403, the second reference signal sent by the fifth UE by using the N transmission beams, to successfully receive the second reference signal.

In some embodiments, the fifth UE further performs S1405.

S1405: The fifth UE sends, to the sixth UE by using a fifth transmission beam on a fourth resource of the first time unit, information carried by a physical channel. Correspondingly, the sixth UE receives, on the fourth resource of the first time unit based on the AGC result, the information that is carried by the physical channel and that is sent by the fifth UE by using the fifth transmission beam.

For example, FIG. 15 is used as an example. The fifth transmission beam is a beam identified by a transmission beam N+1 in FIG. 15. The fourth transmission beam further covers the fifth transmission beam. For an understanding of coverage, refer to the descriptions of S701. Details are not described herein again.

For example, the physical channel includes at least one of a PSSCH and a PSCCH. For example, when the physical channel is the PSSCH, the fourth resource may be some symbols in the slot. As shown in FIG. 15, the PSSCH occupies resources corresponding to some subcarriers on a $2^{nd}$ symbol to a $4^{th}$ symbol and resources corresponding to all subcarriers on a $5^{th}$ symbol to a $9^{th}$ symbol in a slot. For another example, when the physical channel is the PSCCH, the fourth resource may be some symbols in the slot. As shown in FIG. 15, the PSCCH occupies resources corresponding to some subcarriers on a $2^{nd}$ symbol to a $4^{th}$ symbol in a slot.

For example, for the sixth UE, the sixth UE receives, on the fourth resource of the first time unit by using the amplification coefficient determined in S1403, the information that is carried by the physical channel and that is sent by the fifth UE by using the fifth transmission beam, to successfully receive the information carried by the physical channel.

It should be noted that, in embodiments of this application, the first UE and the fifth UE may be a same UE, or may be different UEs. This is not limited in embodiments of this application. When the first UE and the fifth UE are the same UE, the first UE may first perform S702, and then perform S1402.

The foregoing mainly describes the solutions provided in embodiments of this application from a perspective of interaction between network elements. Correspondingly, embodiments of this application further provide a communication apparatus. The communication apparatus may be a network element in the foregoing method embodiments, an apparatus including the network element, or a component that may be used in the network element. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of technical solutions. A person skilled in the art may use different methods to implement the described functions for each particular application, but it should not be considered that the implementation goes beyond the scope of this application.

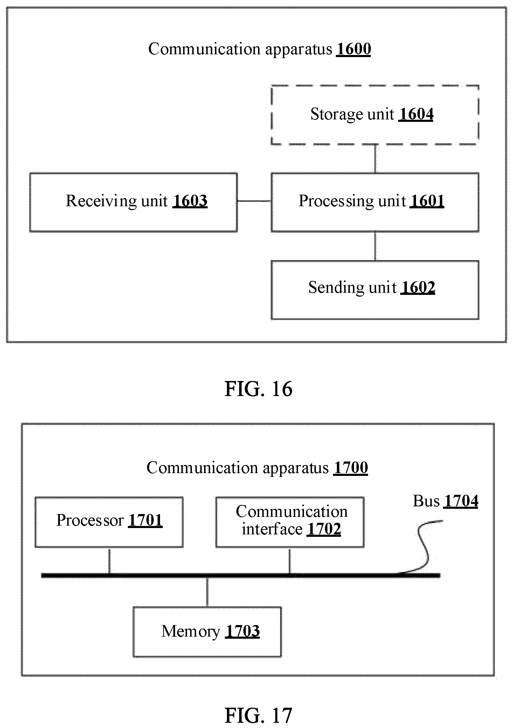

For example, FIG. 16 is a diagram of a structure of a communication apparatus 1600. The communication apparatus 1600 includes a processing unit 1601, a sending unit 1602, and a receiving unit 1603.

In a possible example, that the communication apparatus 1600 is a first UE is used as an example. The processing unit 1601 is configured to support the first UE in performing S701 in FIG. 7 and/or another processing operation that needs to be performed by the first UE in this embodiment of this application. The sending unit 1602 is configured to support the first UE in performing S702 and S703 in FIG. 7 and/or another sending operation that needs to be performed by the first UE in this embodiment of this application. The receiving unit 1603 is configured to support another receiving operation that needs to be performed by the first UE in this embodiment of this application.

In another possible example, that the communication apparatus 1600 is a second UE is used as an example. The processing unit 1601 is configured to support the second UE in performing S704 in FIG. 7 and/or another processing operation that needs to be performed by the second UE in this embodiment of this application. The sending unit 1602 is configured to support another sending operation that needs to be performed by the second UE in this embodiment of this application. The receiving unit 1603 is configured to support the second UE in performing S702 in FIG. 7 and/or another receiving operation that needs to be performed by the second UE in this embodiment of this application.

In still another possible example, that the communication apparatus 1600 is a third UE is used as an example. The processing unit 1601 is configured to support another processing operation that needs to be performed by the third UE in this embodiment of this application. The sending unit 1602 is configured to support another sending operation that needs to be performed by the third UE in this embodiment of this application. The receiving unit 1603 is configured to support the third UE in performing S703 in FIG. 7 and/or another receiving operation that needs to be performed by the third UE in this embodiment of this application.

In still another possible example, that the communication apparatus 1600 is a fifth UE is used as an example. The processing unit 1601 is configured to support the fifth UE in performing S1401 in FIG. 14 and/or another processing operation that needs to be performed by the fifth UE in this embodiment of this application. The sending unit 1602 is configured to support the fifth UE in performing S1402, S1404, and S1405 in FIG. 14 and/or another sending operation that needs to be performed by the fifth UE in this embodiment of this application. The receiving unit 1603 is configured to support another receiving operation that needs to be performed by the fifth UE in this embodiment of this application.

In still another possible example, that the communication apparatus 1600 is a sixth UE is used as an example. The processing unit 1601 is configured to support the sixth UE in performing S1403 in FIG. 14 and/or another processing operation that needs to be performed by the sixth UE in this embodiment of this application. The sending unit 1602 is configured to support another sending operation that needs to be performed by the sixth UE in this embodiment of this application. The receiving unit 1603 is configured to support the sixth UE in performing S1402, S1404, and S1405 in FIG. 14 and/or support another receiving operation that needs to be performed by the sixth UE in this embodiment of this application.

Optionally, the communication apparatus 1600 further includes a storage unit 1604, configured to store program code and data of the communication apparatus, where the data may include but is not limited to original data, intermediate data, or the like.

The processing unit 1601 may be a processor or a controller, for example, may be a CPU, a general-purpose processor, an application specific integrated circuit (application specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination including one or more microprocessors, or a combination of a DSP and a microprocessor.

The sending unit 1602 may be a communication interface, a transmitter, a sending circuit, or the like. The communication interface is a collective name. During specific implementation, the communication interface may include a plurality of interfaces.

The receiving unit 1603 may be a communication interface, a receiver, a receiving circuit, or the like. The communication interface is a collective name. During specific implementation, the communication interface may include a plurality of interfaces.

The sending unit 1602 and the receiving unit 1603 may be physically or logically implemented as a same unit.

The storage unit 1604 may be a memory.

When the processing unit 1601 is the processor, the sending unit 1602 and the receiving unit 1603 are the communication interfaces, and the storage unit 1604 is the memory, the communication apparatus in this embodiment of this application may be shown in FIG. 17.

Refer to FIG. 17. The communication apparatus 1700 includes: a processor 1701, a communication interface 1702, and a memory 1703. Optionally, the communication apparatus may further include a bus 1704. The communication interface 1702, the processor 1701, and the memory 1703 may be connected to each other through the bus 1704. The bus 1704 may be a peripheral component interconnect (peripheral component interconnect, PCI) bus, an extended industry standard architecture (extended industry standard architecture, EISA) bus, or the like. The bus 1704 may be classified into an address bus, a data bus, a control bus, and the like. For ease of representation, only one bold line is used to represent the bus in FIG. 17, but this does not mean that there is only one bus or only one type of bus.

Optionally, embodiments of this application further provide a computer program product that carries computer instructions. When the computer instructions are run on a computer, the computer is enabled to perform the method described in the foregoing embodiments.

Optionally, embodiments of this application further provide a computer-readable storage medium. The computer-readable storage medium stores computer instructions. When the computer instructions are run on a computer, the computer is enabled to perform the method described in the foregoing embodiments.

Optionally, embodiments of this application further provide a chip, including a processing circuit and a transceiver circuit. The processing circuit and the transceiver circuit are configured to implement the method described in the foregoing embodiments. The processing circuit is configured to perform a processing action in a corresponding method, and the transceiver circuit is configured to perform a receiving/sending action in the corresponding method.

All or some of the foregoing embodiments may be implemented by using software, hardware, firmware, or any combination thereof. When the software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, like a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state drive, SSD)), or the like.

In the several embodiments provided in this application, it should be understood that the disclosed system, apparatus, and method may be implemented in other manners. For example, the apparatus embodiment described above is merely an example. For example, the division of modules is merely a division of logical functions and there may be other division modes during actual implementation. For example, a plurality of modules or components may be combined or may be integrated to another system, or some characteristics may be ignored or not executed. In addition, the displayed or discussed mutual couplings or direct couplings or communication connections may be implemented through some interfaces. The indirect couplings or communication connections between the apparatuses or modules may be implemented in electronic or other forms.

The units described as separate components may or may not be physically separate, and components displayed as units may or may not be physical units, may be located in one position, or may be distributed on a plurality of devices. Some or all of the units may be selected based on actual requirements to achieve the objectives of the solutions of embodiments.

Based on the foregoing descriptions of the implementations, a person skilled in the art may clearly understand that this application may be implemented by software in addition to necessary universal hardware or by hardware only. In most circumstances, the former is a preferred implementation. Based on such an understanding, the technical solutions of this application essentially or the part making contribution may be implemented in a form of a software product. The computer software product is stored in a readable storage medium, like a floppy disk, a hard disk, or an optical disc of a computer, and includes several instructions for instructing a computer device (which may be a personal computer, a server, a network device, or the like) to perform the methods described in embodiments of this application.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

**Claims**

1. A beam training method, comprising:

    sending, by a first user equipment UE, first control information by using a first transmission beam, wherein the first control information comprises resource location information of a first resource; and
    sending, by the first UE, a first reference signal on the first resource by using M transmission beams, wherein M is a positive integer, the first transmission beam is different from each of the M transmission beams, and the first transmission beam covers each of the M transmission beams.

2. The method according to claim 1, wherein the first control information further comprises beam gain information, and the beam gain information is determined based on a beam gain of the first transmission beam and a beam gain of at least one of the M transmission beams.

3. The method according to claim 2, wherein the beam gain information comprises at least one of the following:

    a largest value of differences between the beam gain of the first transmission beam and beam gains of the M transmission beams;
    a smallest value of the differences between the beam gain of the first transmission beam and the beam gains of the M transmission beams;
    an average value of all the differences between the beam gain of the first transmission beam and the beam gains of the M transmission beams;
    a difference between the beam gain of the first transmission beam and a beam gain of one of the M transmission beams;
    a largest value of ratios of the beam gain of the first transmission beam to the beam gains of the M transmission beams;
    a smallest value of the ratios of the beam gain of the first transmission beam to the beam gains of the M transmission beams;
    an average value of all the ratios of the beam gain of the first transmission beam to the beam gains of the M transmission beams; and
    a ratio of the beam gain of the first transmission beam to a beam gain of one of the M transmission beams.

4. The method according to claim 1, wherein the first control information further comprises period duration and/or a period repetition quantity of the first resource.

5. The method according to any one of claims 1 to 4, wherein the first control information further comprises first indication information, the first indication information indicates that the M transmission beams in a second period are the same as a beam set in a first period, and the second period is later than the first period.

6. The method according to any one of claims 1 to 5, wherein that the first transmission beam covers each of the M transmission beams comprises:

    a $Y_2$ dB beamwidth of a second transmission beam is comprised in a $Y_1$ dB beamwidth of the first transmission beam; or
    a fifth difference is less than a first threshold, wherein the fifth difference is an absolute value of a difference between a beam gain of the first transmission beam and a beam gain of a second transmission beam in a beam peak direction of the second transmission beam; or
    a sixth difference is less than a second threshold, wherein the sixth difference is an absolute value of a difference between a beam gain of the first transmission beam and a beam gain of a second transmission beam in a direction within a first range, and the first range is a $Y_3$ dB range of a peak equivalent isotropic radiated power EIRP of the second transmission beam; or
    a seventh difference is less than a third threshold, wherein the seventh difference is an absolute value of a difference between a beam gain of the first transmission beam in a direction within a second range and a beam gain of the first transmission beam in a beam peak direction of the first transmission beam, and the second range is a $Y_4$ dB range of a peak equivalent isotropic radiated power EIRP of a second transmission beam; or

an absolute value of a difference between a first angle and a second angle is less than a fourth threshold, and an absolute value of a difference between a third angle and a fourth angle is less than a fifth threshold, wherein the first angle is an angle in a first direction corresponding to a precoding codeword of the first transmission beam, the second angle is an angle in a first direction corresponding to a precoding codeword of the second transmission beam, the third angle is an angle in a second direction corresponding to the precoding codeword of the first transmission beam, and the fourth angle is an angle in a second direction corresponding to the precoding codeword of the second transmission beam, wherein

the second transmission beam is each of the M transmission beams.

7. The method according to any one of claims 1 to 6, wherein the method further comprises:
determining, by the first UE, the first transmission beam based on the M transmission beams.

8. The method according to claim 7, wherein the first transmission beam is a beam with a smallest $Y_5$ dB beamwidth in a third transmission beam, the third transmission beam meets a first condition, and the first condition comprises that a $Y_5$ dB beamwidth of the third transmission beam comprises a beam peak direction of each of the M transmission beams.

9. The method according to any one of claims 1 to 8, wherein the resource location information comprises at least one of the following: a frame index, a slot index, a symbol index, a quantity of symbols, a sub channel index, a physical resource block PRB index, a resource element RE index, a symbol offset, or a slot offset, wherein

the quantity of symbols is a quantity of symbols for sending the first reference signal in a slot; the slot offset is a quantity of offset slots between a slot in which the first reference signal is sent and a slot in which the first control information is sent; and
the symbol offset is a quantity of offset symbols between a symbol for sending the first reference signal and a symbol for sending the first control information.

10. The method according to any one of claims 1 to 9, wherein the method further comprises:

sending, by the first UE, a second reference signal on a second resource of a first time unit by using N transmission beams, wherein N is a positive integer; and
sending, by the first UE, a third signal on a third resource of the first time unit by using a fourth transmission beam, wherein the third signal is used by a UE that receives the second reference signal to perform automatic gain control AGC, and the fourth transmission beam covers each of the N transmission beams.

11. The method according to claim 10, wherein the method further comprises:
sending, by the first UE on a fourth resource of the first time unit by using a fifth transmission beam, information carried by a physical channel, wherein the fourth transmission beam further covers the fifth transmission beam, and the third signal is further used by a UE that receives the information carried by the physical channel to perform AGC.

12. The method according to claim 11, wherein the physical channel comprises a physical sidelink control channel PSCCH and/or a physical sidelink shared channel PSSCH.

13. A beam training method, comprising:

sending, by a first user equipment UE, a second reference signal on a second resource of a first time unit by using N transmission beams, wherein N is a positive integer; and
sending, by the first UE, a third signal on a third resource of the first time unit by using a fourth transmission beam, wherein the third signal is used by a UE that receives the second reference signal to perform automatic gain control AGC, and the fourth transmission beam covers each of the N transmission beams.

14. The method according to claim 13, wherein the method further comprises:
sending, by the first UE on a fourth resource of the first time unit by using a fifth transmission beam, information carried by a physical channel, wherein the fourth transmission beam further covers the fifth transmission beam, and the third signal is further used by a UE that receives the information carried by the physical channel to perform AGC.

15. The method according to claim 14, wherein the physical channel comprises a physical sidelink control channel PSCCH and/or a physical sidelink shared channel PSSCH.

16. A beam training method, comprising:

receiving, by a second user equipment UE, first control information sent by a first UE by using a first transmission beam, wherein the first control information comprises resource location information of a first resource, the first resource is used by the first UE to send a first reference signal by using M transmission beams, the first transmission beam is different from each of the M transmission beams, the first transmission beam covers each of the M transmission beams, and M is a positive integer; and

performing, by the second UE, resource determining based on the first control information.

17. The method according to claim 15, wherein the first control information further comprises beam gain information, and the beam gain information is determined based on a beam gain of the first transmission beam and a beam gain of at least one of the M transmission beams.

18. The method according to claim 17, wherein the beam gain information comprises at least one of the following:

a largest value of differences between the beam gain of the first transmission beam and beam gains of the M transmission beams;

a smallest value of the differences between the beam gain of the first transmission beam and the beam gains of the M transmission beams;

an average value of all the differences between the beam gain of the first transmission beam and the beam gains of the M transmission beams;

a difference between the beam gain of the first transmission beam and a beam gain of one of the M transmission beams;

a largest value of ratios of the beam gain of the first transmission beam to the beam gains of the M transmission beams;

a smallest value of the ratios of the beam gain of the first transmission beam to the beam gains of the M transmission beams;

an average value of all the ratios of the beam gain of the first transmission beam to the beam gains of the M transmission beams; and

a ratio of the beam gain of the first transmission beam to a beam gain of one of the M transmission beams.

19. The method according to claim 17 or 18, wherein the method further comprises:

measuring, by the second UE, a receive power of the first transmission beam; and

the performing, by the second UE, resource determining based on the first control information comprises:

determining, by the second UE, a first predicted power based on the beam gain information and the receive power of the first transmission beam, wherein the first predicted power is related to a predicted receive power of at least one of the M transmission beams; and

performing, by the second UE, resource determining based on the resource location information of the first resource and the first predicted power.

20. The method according to claim 19, wherein the performing, by the second UE, resource determining based on the resource location information of the first resource and the first predicted power comprises:

when the first predicted power is greater than a power threshold, performing, by the second UE, resource determining in another resource other than the first resource.

21. The method according to claim 16, wherein the first control information further comprises period duration and/or a period repetition quantity of the first resource.

22. The method according to any one of claim 16, 17, 18, or 21, wherein the first control information further comprises first indication information, the first indication information indicates that the M transmission beams in a second period are the same as a beam set in a first period, and the second period is later than the first period.

23. The method according to claim 21 or 22, wherein the method further comprises:

measuring, by the second UE, a receive power of each transmission beam in the beam set in the first period, wherein the first period is earlier than a period in which the first resource is located; and
the performing, by the second UE, resource determining based on the first control information comprises:
performing, by the second UE, resource determining based on the first control information and the receive power of each transmission beam in the beam set in the first period.

24. The method according to claim 23, wherein

when a ratio of a quantity of second transmission beams to M is greater than a first value, the first resource is used as a resource that is recommended not to be used; or
when a quantity of second transmission beams is greater than a second value, the first resource is used as a resource that is recommended not to be used, wherein
the second transmission beam is a beam in the beam set in the first period, and a receive power of the second transmission beam is greater than a power threshold.

25. The method according to any one of claims 16 to 24, wherein the method further comprises:
sending, by the second UE, auxiliary information to a fourth UE, wherein the auxiliary information is used by the fourth UE to determine a resource for data transmission.

26. A user equipment, comprising: a processor and a memory, wherein the processor is coupled to the memory, the memory stores program instructions, and when the program instructions stored in the memory are executed by the processor, the method according to any one of claims 1 to 12 is implemented, the method according to any one of claims 13 to 15 is implemented, or the method according to any one of claims 16 to 25 is implemented.

27. A chip, comprising a processor and an input/output interface, wherein the input/output interface is configured to receive a signal from another apparatus other than the chip and transmit the signal to the processor, or send a signal from the processor to another apparatus other than the chip, and the processor is configured to implement the method according to any one of claims 1 to 12, implement the method according to any one of claims 13 to 15, or implement the method according to any one of claims 16 to 25 by using a logic circuit or executing code instructions.

28. A computer-readable storage medium, wherein the storage medium stores a computer program or instructions, and when the computer program or the instructions are executed, the method according to any one of claims 1 to 12 is implemented, the method according to any one of claims 13 to 15 is implemented, or the method according to any one of claims 16 to 25 is implemented.

FIG. 1

FIG. 2

FIG. 3

FIG. 4

EP 4 462 701 A1

TxUE 1

RxUE 1

Transmission
beam 1

Transmission
beam 2

Transmission
beam 3

Transmission
beam 4

Reception beam 1

FIG. 5

FIG. 6

**700**

| Third UE | First UE | Second UE |

S701: Determine a first transmission beam

S702: First control information

S703: First reference signal

S704: Perform resource determining based on the first control information

FIG. 7

RxUE 1

RxUE 2

Reception beam 1

Transmission beam 1

Transmission beam 2

Transmission beam 3

Transmission beam 4

TxUE 1

TxUE 2

FIG. 8

FIG. 9

EP 4 462 701 A1

FIG. 10a

Transmission beam 2

First transmission beam

Beam gain 2

Beam gain A

FIG. 10b

First range

Peak EIRP

Transmission
beam 2

Beam
gain 2

Beam
gain A

First transmission
beam

FIG. 10c

FIG. 10d

M transmission beams

Transmission beam 1

...

Transmission beam M

First transmission beam

AGC

SCI

CSI-RS

Slot 1

Slot 2

Slot 3

FIG. 11a

FIG. 11b

FIG. 11c

FIG. 11d

M+1 transmission
beams

M transmission
beams

Transmission
beam 1

...

Transmission
beam M+1

Transmission
beam 1

...

Transmission
beam M

First
transmission
beam

AGC

SCI

CSI-RS

First period

Next period of the first period

FIG. 11e

FIG. 12a

FIG. 12b

FIG. 13a

CSI-RS

| AGC | | | | | AGC | | AGC | | AGC | | AGC | | GAP |

One slot

## FIG. 13b

**1400**

```
┌─────────────┐        ┌─────────────┐
│  Fifth UE   │        │  Sixth UE   │
└─────────────┘        └─────────────┘
```

S1401: Determine a fourth transmission beam

S1402: Third signal

S1403: Perform AGC based on the third signal

S1404: Second reference signal

S1405: Information carried by a physical channel

## FIG. 14

FIG. 15

Communication apparatus **1600**

Storage unit **1604**

Receiving unit **1603**

Processing unit **1601**

Sending unit **1602**

FIG. 16

Communication apparatus **1700**

Processor **1701**

Communication interface **1702**

Bus **1704**

Memory **1703**

FIG. 17

## INTERNATIONAL SEARCH REPORT

| International application No. |
| --- |
| **PCT/CN2022/140125** |

**A.    CLASSIFICATION OF SUBJECT MATTER**

H04J11/00(2006.01)i

According to International Patent Classification (IPC) or to both national classification and IPC

**B.    FIELDS SEARCHED**

Minimum documentation searched (classification system followed by classification symbols)

IPC: H04W, H04J

Documentation searched other than minimum documentation to the extent that such documents are included in the fields searched

Electronic data base consulted during the international search (name of data base and, where practicable, search terms used)

EPODOC, WPI, CNPAT, CNKI, 3GPP: 波束训练, 测量, 覆盖, 宽, 参考信号, 波束增益, 增益控制, AGC, CSI-RS, beam, training, measure, gain, control, cover, wide, reference, signal

**C.    DOCUMENTS CONSIDERED TO BE RELEVANT**

| Category* | Citation of document, with indication, where appropriate, of the relevant passages | Relevant to claim No. |
| --- | --- | --- |
| X | CN 110649947 A (HUAWEI TECHNOLOGIES CO., LTD.) 03 January 2020 (2020-01-03) description, paragraphs [0140]-[0192], and figure 6 | 1-12, 16-28 |
| Y | CN 110649947 A (HUAWEI TECHNOLOGIES CO., LTD.) 03 January 2020 (2020-01-03) description, paragraphs [0140]-[0192], and figure 6 | 13-15 |
| Y | CN 111602430 A (SAMSUNG ELECTRONICS CO., LTD.) 28 August 2020 (2020-08-28) description, paragraphs [0015]-[0034], and figure 8A | 13-15 |
| A | CN 109756258 A (HUAWEI TECHNOLOGIES CO., LTD.) 14 May 2019 (2019-05-14) entire document | 1-28 |
| A | CN 107294586 A (ZTE CORP.) 24 October 2017 (2017-10-24) entire document | 1-28 |
| A | WO 2021080868 A1 (QUALCOMM INC.) 29 April 2021 (2021-04-29) entire document | 1-28 |
| A | VIVO. "TRS/CSI-RS Occasion(s) for Idle/Inactive UEs" *3GPP TSG RAN WG1 #103-e R1-2007674*, 13 November 2020 (2020-11-13), entire document | 1-28 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **03 February 2023** | **20 February 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/140125**

| Patent document cited in search report | | | Publication date (day/month/year) | Patent family member(s) | | | Publication date (day/month/year) |
|---|---|---|---|---|---|---|---|
| CN | 110649947 | A | 03 January 2020 | EP | 3806345 | A1 | 14 April 2021 |
| | | | | WO | 2020001454 | A1 | 02 January 2020 |
| CN | 111602430 | A | 28 August 2020 | US | 2020404583 | A1 | 24 December 2020 |
| | | | | WO | 2019156456 | A1 | 15 August 2019 |
| | | | | US | 2019246340 | A1 | 08 August 2019 |
| | | | | US | 2021266826 | A1 | 26 August 2021 |
| | | | | KR | 20190095071 | A | 14 August 2019 |
| | | | | EP | 3704897 | A1 | 09 September 2020 |
| CN | 109756258 | A | 14 May 2019 | None | | | |
| CN | 107294586 | A | 24 October 2017 | WO | 2017173916 | A1 | 12 October 2017 |
| WO | 2021080868 | A1 | 29 April 2021 | TW | 202123624 | A | 16 June 2021 |
| | | | | US | 2021127381 | A1 | 29 April 2021 |

Form PCT/ISA/210 (patent family annex) (July 2022)

**EP 4 462 701 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210122311X

- CN 202210303346